# EUROPÄISCHE PATENTANMELDUNG

(11) **EP 4 667 182 A1**
(43) Veröffentlichungstag der Anmeldung: **24.12.2025**
(21) Anmeldenummer: 25182073.4
(22) Anmeldetag: 11.06.2025
(51) Int. Cl.: B29C 44/02, B29C 44/14, B29C 44/44, B29K 105/04

(54) **VERFAHREN ZUR HERSTELLUNG EINES BAUELEMENTES**

(30) Priorität: 19.06.2024 DE 102024117329; 24.07.2024 DE 102024121045; 23.12.2024 DE 102024139628
(71) Anmelder: PARAT Technology Group GmbH., 94089 Neureichenau (DE)
(72) Erfinder: Kremsreiter, Martin, 94089 Neureichenau (DE)
(74) Vertreter: Roche, von Westernhagen & Ehresmann

(57) **Zusammenfassung**

Die Erfindung betrifft unter anderem ein Verfahren zur Herstellung eines Bauelementes, umfassend die folgenden Schritte:
a) Bereitstellen eines ersten folienartigen Substrates mit einer ersten Außenkontur,
b) Bereitstellen eines zweiten folienartigen Substrates mit einer zweiten Außenkontur, das wenigstens einen Durchbruch aufweist,
c) Bereitstellen eines zwei Werkzeughälften umfassenden, öffnen- und schließbaren Werkzeuges, wobei die zweite Werkzeughälfte wenigstens eine Befüllöffnung aufweist, wobei die erste Werkzeughälfte eine zu der ersten Außenkontur formkomplementäre erste Innenkontur und die zweite Werkzeughälfte eine zu der zweiten Außenkontur formkomplementäre zweite Innenkontur aufweist,
d) Anordnen der beiden Substrate in dem geöffneten Werkzeug, derart, dass Durchbruch und Befüllöffnung miteinander fluchten,
e) Schließen des Werkzeugs,
f) Bereitstellen von granularem Ausgangsmaterial in Form von losen Partikeln eines aufschäumbaren Partikelschaumes,
g) Zuführen der Partikel durch die Befüllöffnung und den Durchbruch hindurch in eine von den beiden Substraten begrenzte Kavität.

## Beschreibung

Die Erfindung bezieht sich auf ein Verfahren zur Herstellung eines flächenhaft ausgebildeten Bauelementes nach Anspruch 1.

Die Erfindung betrifft insbesondere ein Verfahren zur Herstellung eines flächenhaft ausgebildeten Bauelementes in Sandwich-Leichtbauweise mit einer hochwertigen Oberfläche.

Derartige Verfahren werden von der Anmelderin seit Jahrzehnten entwickelt und in großem Umfange durchgeführt.

Lediglich beispielhaft wird verwiesen auf die folgenden deutschen Patentanmeldungen der Anmelderin:
DE 10 2018 117 337, DE 10 2017 109 953, DE 10 2016 112 290 A1, DE 10 2013 018 694 A1, DE 10 2013 008 592 A1, DE 10 2013 005 523 A1, DE 10 2013 008 364 A1, DE 10 2015 111 052 A1 sowie DE 10 2012 017 698 A1,
deren Inhalt hiermit in den Inhalt der vorliegenden Patentanmeldung zur Vermeidung von Wiederholungen miteingeschlossen wird.

Die von der Anmelderin bislang überwiegend angewandten Verfahren zur Herstellung eines solchen flächenhaft ausgebildeten Bauelementes umfassen insbesondere Verbindungen von thermoplastischen tiefgezogenen Folien mit Polyurethan-Schaummassen.

Von der Anmelderin werden aber seit einigen Jahren auch Verfahren entwickelt und angewandt, bei denen Partikelschäume verbacken werden. Hierzu wird beispielhaft verwiesen auf die deutschen Patentanmeldungen DE 10 2018 123 703 A1, DE 10 2019 117 661 A1, DE 10 2019 109 820 A1, DE 10 2019 109 823 A1 und DE 10 2019 109 824 A1, deren Inhalt hiermit ebenfalls in den Inhalt der vorliegenden Patenanmeldung zur Vermeidung von Wiederholungen mit eingeschlossen wird.

Hiervon ausgehend liegt der Erfindung die Aufgabe zugrunde, ein Verfahren anzugeben, mit dem ein flächenhaftes Bauelement gefertigt werden kann, welches den Anforderungen an ein geringes Gewicht und eine hohe Steifigkeit gerecht wird, und preisgünstig gefertigt werden kann.

Die Erfindung löst diese Aufgabe mit den Merkmalen des Anspruches 1.

Das Prinzip der Erfindung besteht zunächst darin, anstelle der bislang verwendeten Polyurethan-Zweikomponentenschäume einen expandierbaren Partikelschaum einzusetzen.

Als geeignete expandierbare Partikelschäume kommen beispielsweise Partikelschäume aus EPS, EPE und EPP infrage. Es handelt sich hier um Partikelschäume, die im voll oder endfertig ausgeschäumten und ausgehärteten Zustand Dichten im Bereich von typischerweise 15 kg/m³ bis 200 kg/m³ aufweisen können.

Gemäß der Erfindung wird zunächst ein erstes folienartiges Substrat bereitgestellt. Es kann sich dabei beispielweise um eine tiefziehbare Folie, z. B. aus einem Co-Extrudat aus ABS oder PMMA oder um ein Co-Extrudat aus ABS, Polycarbonat und PPMA handeln. Diese kann beispielsweise eine Wandstärke zwischen 0,2 und 13 mm aufweisen. Die Folie kann beispielsweise in einem ersten Werkzeug tiefgezogen werden. Das verwendete erste Substrat kann aber auch von einer dünnen Haut, einer dünnen Folie, oder einem anderen flächenhaften Material bereitgestellt sein. Das erste Substrat muss nicht tiefgezogen sein.

Gemäß der Erfindung wird das erste Substrat in einer ersten Werkzeughälfte eines Schäumwerkzeuges angeordnet.

Gemäß der Erfindung wird darüber hinaus ein zweites Substrat bereitgestellt. Dies kann ebenfalls eine tiefgezogene Folie, oder ein Kunststoff-Spritzgießteil sein. Das zweite Substrat wird in einer zweiten Werkzeughälfte angeordnet.

Die erste Werkzeughälfte weist eine Innenkontur auf, die formkomplementär zu einer Außenkontur des ersten Substrates ausgebildet ist. Die zweite Werkzeughälfte weist eine Innenkontur auf, die komplementär zu einer Außenkontur des zweiten Substrates ausgebildet ist.

Das erste Substrat und das zweite Substrat können jeweils schalenförmig ausgebildet sein. Das zweite Substrat kann z.B. auch von einem Ringkörper gebildet sein.

Das erste Substrat ist insbesondere vollflächig durchgehend ausgebildet. Es umfasst insbesondere eine Bodenwand und relativ zu der Bodenwand gebogene oder von der Bodenwand abstehend ausgebildete Seitenwandabschnitte. Das zweite Substrat kann ebenfalls schalenförmig ausgebildet sein. Es kann insbesondere ebenfalls eine Bodenwand und davon abstehende Seitenwandabschnitte aufweisen. Das zweite Substrat kann aber auch ringförmig ausgebildet sein.

Das zweite Substrat weist wenigstens eine Öffnung auf, die als Durchbruch bezeichnet wird. Die zweite Werkzeughälfte weist eine Befüllöffnung auf, durch die Partikel hindurch in eine von den beiden Substraten mit ihren jeweiligen Innenflächen gebildete Kavität oder zumindest teilweise begrenzte Kavität zugeführt werden können. Eine Partikelzuführung erfolgt insbesondere druckluftbetrieben.

Der Durchbruch in dem zweiten Substrat wird im Zuge der Anordnung des Substrates an der zweiten Werkzeughälfte in fluchtender Anordnung zu der Befüllöffnung gebracht.

Dadurch, dass gemäß dem erfindungsgemäßen Verfahren ein erstes Substrat und ein zweites Substrat bereitgestellt werden, die insbesondere beide schon eine vorgegebene Geometrie aufweisen, und nur noch in das Werkzeug eingelegt werden müssen, besteht die Möglichkeit, dass an dem ersten Substrat und/oder an dem zweiten Substrat bereits funktionalisierte Bereiche angeordnet sein können. Die funktionalisierten Bereiche können beispielsweise Rippen, leistenartige Verdickungen, Schraubbefestigungsbereiche, ballige Verdickungen, Aufnahmebereiche, Streben, Dome oder dergleichen umfassen.

Von der Erfindung ist auch umfasst, wenn das erste Substrat und/oder das zweite Substrat ein funktionales Element, z. B. einen metallischen oder textilen Einleger aufweisen, oder z. B. auch einen Quergurt, insbesondere nach Art eines Zugankers, umfassen.

Das erfindungsgemäße Verfahren sieht vor, dass granulares Ausgangsmaterial in Form von losen Partikeln eines aufschäumbaren Partikelschaums bereitgestellt wird. Infrage kommen Materialien, die als expandierbare Partikelschäume bekannt sind. Insbesondere versteht man hierunter expandierbare Partikelschäume aus EPS, EPE, oder EPP, oder auch expandierbares PEEK. Eine weitere Definition erfolgt weiter unten.

Das granulare Ausgangsmaterial kann in der verwendeten Form von kleinen Kügelchen oder Perlen, oder in Form von granularen Partikeln anderer regelmäßiger oder auch unregelmäßiger Form und Geometrie bereitgestellt werden. Das Ausgangsmaterial ist insbesondere schüttbar.

Die Partikel sind in dem granularen Ausgangsmaterial lose vorhanden, d. h. insbesondere noch nicht fest miteinander verbunden.

Gemäß einer Variante der Erfindung werden der Kavität teilweise aufgeschäumte Partikel zugeführt. Dies bedeutet, dass die Partikel bei ihrer Zuführung noch nicht vollständig aufgeschäumt sind.

Beispielsweise kann gemäß der Erfindung vorgesehen sein, dass bezogen auf einen Aufschäum- oder Expansionsvorgang von 0 bis 100% ausgehend vom Volumen der Partikel des Ausgangsmaterials bis zu dem Volumen der Partikel im endfertig geschäumten Zustand, ein teilweises Aufschäumen zwischen 30 und 95% stattfindet. Der Begriff teilweises Aufschäumen umfasst insbesondere Ausführungsbeispiele der Erfindung, bei denen in der Kavität der Schritt eines zusätzlichen Aufschäumens der Partikel durchgeführt wird, hin zu einem endaufgeschäumten Zustand der Partikel.

Der Schritt des teilweisen Aufschäumens, eines sog. Voraufschäumens, erfolgt insbesondere - aber nicht zwingend - an einem Ort, der sich entfernt von dem Werkzeug befindet, in dem die Substrate angeordnet werden. Weiter vorteilhafterweise kann das teilweise Aufschäumen der Partikel in einem Ofen, insbesondere in einem Infrarot-Backofen, durchgeführt werden.

Gemäß einer anderen Variante der Erfindung werden der Kavität vollständig aufgeschäumte Partikel zugeführt.

Gemäß dem erfindungsgemäßen Verfahren können die vorgeschäumten oder endaufgeschäumten Partikel in die Kavität verbracht werden. Der Transport der Partikel kann beispielsweise zeitlich unmittelbar nach der Durchführung eines Schrittes eines teilweisen Aufschäumens der Partikel durchgeführt werden. Er kann aber auch mit zeitlichem Abstand zu einer Durchführung eines Schrittes eines teilweisen Aufschäumens der Partikel durchgeführt werden.

Ein Verbringen und/oder ein Anordnen oder Positionieren der Partikel in der Kavität kann maschinell, insbesondere druckluftgetrieben, automatisiert, oder händisch erfolgen.

Gemäß der Erfindung wird das Werkzeug vor der Zuführung der Partikel geschlossen. Hierzu kann beispielsweise eine erste Werkzeughälfte gegen eine zweite Werkzeughälfte fahren und einen Aufnahmeraum oder Unterbringungsraum für die Partikel - sowie für die in dem Werkzeug befindlichen Substrate - verschließen oder im Wesentlichen verschließen.

Das Werkzeug wird zumindest so weit geschlossen, dass keine Partikel mehr aus dem Inneren des Werkzeuges nach außen gelangen können.

Nach dem Befüllen des Werkzeuges mit Partikelschaum-Partikeln und dem Schließen des Werkzeuges, wird das Werkzeug geheizt. Von der Erfindung ist insbesondere umfasst, wenn das Werkzeug einer Temperaturwechselbeanspruchung unterworfen wird, und eine Temperatur oberhalb einer Schmelztemperatur des Partikelschaumes erreichen kann, sowie eine Temperatur unterhalb dieser Schmelztemperatur erreichen kann. Innerhalb dieser Temperaturbereiche kann das Werkzeug entlang von Temperaturrampen betrieben werden.

Gemäß der Erfindung erfolgt infolge des Heizens des Werkzeuges ein Wärmetransfer durch die beiden Substrate hindurch in die Kavität hinein. Durch das Einbringen dieser Wärmeenergie kommt es zu einem Verbacken der Partikel zu einem vollständig aufgeschäumten Partikelschaum. Der Schritt des Verbackens kann ein Endaufschäumen der zuvor bereits teilweise aufgeschäumten Partikel umfassen. Die Partikel schmelzen an und verbinden sich miteinander.

Erfindungsgemäß wird insbesondere kein Dampf in die Kavität eingeleitet. Bei Verfahren des Standes der Technik erfolgt ein Aufschäumen der Partikel aus Partikelschaum unter Zuhilfenahme von Wasserdampf. Die Erfindung kommt hingegen ohne die Verwendung von Wasserdampf aus. Dies ermöglicht insbesondere eine Fertigung vollkommen trockener, das heißt Wasserdampf freier Bauteile. Beispielsweise können damit auch elektrische oder metallische Komponenten in der Kavität mit verschäumt werden.

Für den Fall, dass keine vollständig aufgeschäumten Partikel in die Kavität eingebracht wurden, sondern nur teilweise aufgeschäumte Partikel, kann auch noch ein Endaufschäumvorgang der Partikel, temperaturgesteuert, erfolgen. Die Partikel dehnen sich dabei auf ihren maximalen Umfang bzw. auf ihr maximales Volumen aus, und verbacken oder versintern miteinander. Dabei verbindet sich die Partikelschaummasse zugleich mit den beiden Substraten. Die Aktivierung des Schrittes des Verbackens sowie die Aktivierung des Schrittes des Rest- Aufschäumvorgangs erfolgt über die Werkzeugtemperatur.

Von Bedeutung ist, dass neben der Zuführung von Wärmeenergie durch das Heizen des Werkzeuges und durch den Wärmetransfer quer durch die Substrate und hinein in die Kavität kein weiterer Energieeintrag in die Kavität hinein erfolgt. Insbesondere erfolgt im Gegensatz zu herkömmlichen Partikelschaumfertigungsverfahren keine Einleitung von Wasserdampf in die Kavität hinein.

Ein Energieeintrag in die Kavität hinein ist erfindungsgemäß ausschließlich durch das Heizen des Werkzeuges vorgesehen.

Nach dem Schließen des Werkzeuges und nach dem Heizen des Werkzeuges, kann das Werkzeug nach einer Variante der Erfindung noch einen zusätzlichen Werkzeughub durchführen, und das Werkzeug weiter geschlossen werden. Dabei kann eine Komprimierung der erhitzten, angeschmolzenen Partikelschaummasse erfolgen.

Gemäß der Erfindung erfolgt sodann ein Aushärtenlassen der Partikelschaummasse. Infolge dieses Aushärtevorgangs geht die Partikelschaummasse mit den beiden Substraten eine dauerhafte feste Verbindung ein.

Von der Erfindung ist auch umfasst, wenn das erste Substrat und/oder das zweite Substrat auf seiner jeweiligen, der Partikelschaummasse zugewandten Innenseite vor dem Verbringen der Partikel in das Werkzeug mit einer entsprechenden Chemikalie, z. B. nach Art eines Haftgrundes, versehen wird, um die Verbindung zwischen den Substraten und der Partikelschaummasse bzw. das Eingehen der Verbindung zwischen den Substraten und der Partikelschaummasse zu optimieren.

Nach dem Aushärtenlassen der Partikelschaummasse kann das Werkzeug geöffnet und der so gebildete Formling entnommen werden. Der so gebildete Formling stellt das erfindungsgemäß zu fertigende Bauelement dar, oder kann durch nachfolgende Bearbeitungsschritte zu einem solchen Bauelement heranreifen.

Definition expandierbarer Partikelschaum:
Als expandierbare Partikelschäume im Sinne der vorliegenden Patentanmeldung werden beispielsweise folgende Materialien angesehen:
Unter der Abkürzung EPS wird expandierbares Polystyrol bezeichnet. Dieses ist beispielsweise unter der Markenbezeichnung Styropor bekannt, und kann z. B. von der Firma Metz EPS-Hartschaumzuschnitte in 74376 Gemmrigheim bezogen werden.

Als Partikelschaum im Sinne der vorliegenden Patentanmeldung werden auch expandierbare Polyethylene (EPE) angesehen. Schließlich werden auch expandierbare Polypropylene (EPP) für die erfindungsgemäßen Zwecke als gut geeignet angesehen.

Insbesondere sind von dem Begriff Partikelschaum im Sinne der vorliegenden Patentanmeldung thermoplastische Partikelschäume umfasst. Diese können als Ausgangsmaterial Granulat, insbesondere auch Microgranulat, beispielsweise mit Durchmessern der Partikel in der Größenordnung von zwischen 0,1 und 5 mm aufweisen, weiter vorzugsweise Partikel mit einem Durchmesser von ca. 1mm.

In den granularen Ausgangsmaterial-Partikeln des Partikelschaums sind vorzugsweise Treibmittel angeordnet. Diese können thermisch und/oder durch Chemikalien, beispielsweise auch durch Einwirkung von Wasserdampf, aktiviert werden, um den Vorschäumprozess auszulösen.

Der Vorgang des Restaufschäumens, also des Endaufschäumens bereits vorgeschäumter Partikel hin zu endaufgeschäumten Partikeln, wird im Sinne der vorliegenden Patentanmeldung auch als Versintern bezeichnet.

Als Treibmittel kommt für Polystyrol-Partikelschaum-Partikel beispielsweise Pentan in Betracht, das in die granularen Partikel einpolymerisiert ist. Sobald die Partikel Temperaturen von über 100° C ausgesetzt werden, kann das Treibmittel verdampfen und bläht dabei das thermoplastische Grundmaterial zu Polystyrol-Schaumpartikeln auf.

Die zweite Aufschäumstufe kann erfindungsgemäß in dem Werkzeug erfolgen, wobei die Werkzeugtemperatur so gewählt wird, dass das Treibmittel endausdampfen kann, und den Partikel endausschäumen kann.

Neben EPS (expandierbares Polystyrol) kommt für die Erfindung auch ABS in Betracht.

Partikelschäume zum Einsatz mit der Erfindung können auch von expandierbaren Co-Polymeren bereitgestellt werden. Derartige Materialien sind beispielsweise von den Firmen Sunpor oder BASF beziehbar.

Als Ausgangsmaterial des im Rahmen der Erfindung einsetzbaren Partikelschaums kommt auch expandierbares PEEK (Polyetheretherketon) in Betracht. Dieses ist beispielsweise unter den Handelsnamen Gatone oder Victrex beziehbar.

Das erfindungsgemäße Verfahren dient zur Herstellung eines Bauelementes mit einer hochwertigen Oberfläche. Eine hochwertige Oberfläche kann beispielsweise besonders belastbar, z. B. in besonderem Maße schlagzäh ausgebildet sein, und weiter insbesondere für Außenanwendungen geeignet sein. Insbesondere kann eine hochwertige Oberfläche Eigenschaften aufweisen, wie sich bei sogenannten Class-A-Oberflächen gefordert sind.

Die Erfindung bezieht sich auf ein Verfahren zur Herstellung eines flächenhaft ausgebildeten Bauelementes. Der Begriff flächenhaft bedeutet, dass sich das Bauelement entlang einer Fläche in x- und y-Richtung erheblich länger erstreckt als in einer senkrecht dazu stehenden z-Richtung. Die Fläche kann eben oder im Raum gekrümmt, auch mehrfach gekrümmt, ausgebildet sein, und jegliche beliebige Raumform einnehmen.

Die Erfindung bezieht sich des Weiteren auf ein Verfahren nach Anspruch 2.

Dieser Erfindung liegt die Aufgabe zugrunde, ein Verfahren anzugeben, mit dem ein flächenhaftes Bauelement gefertigt werden kann, welches den Anforderungen an ein geringes Gewicht und eine hohe Steifigkeit gerecht wird, und preisgünstig gefertigt werden kann.

Die Erfindung löst diese Aufgabe mit den Merkmalen des Anspruches 2.

Das Prinzip der Erfindung versteht sich am besten im Hinblick auf die obigen Ausführungen zu der Erfindung nach Anspruch 1, die analog gelten.

Gemäß einer vorteilhaften Ausgestaltung der Erfindung ist das erste Substrat und/ oder das zweite Substrat von einer tiefgezogenen Folie bereitgestellt. Dies ermöglicht einen Rückgriff auf herkömmliche Bestandteile eines Bauelementes, die bereits umfangreich erprobt sind, und in besonderem Maße die Bereitstellung einer hochwertigen Oberfläche für das Bauteil ermöglichen.

Gemäß einer vorteilhaften Ausgestaltung der Erfindung wird das erste Substrat oder das zweite Substrat von einem Kunststoffspritzgießteil bereitgestellt. Dies ermöglicht eine besonders preiswerte Fertigung von erfindungsgemäßen Bauelementen, insbesondere bei Kleinserien.

Gemäß einer weiteren vorteilhaften Ausgestaltung der Erfindung ist das erste Substrat vollflächig durchgehend ausgebildet. Dies ermöglicht eine Bereitstellung eines Bauelementes mit einer Oberfläche, die z.B. im Außenbereich eingesetzt werden kann und die insbesondere keiner Nachbearbeitung bedarf.

Gemäß einer weiteren vorteilhaften Ausgestaltung der Erfindung ist das zweite Substrat mit Ausnahme des Durchbruches - oder für den Fall, dass mehrere Durchbrüche vorgesehen sind, mit Ausnahme dieser mehreren Durchbrüche - vollflächig durchgehend ausgebildet. Dies ermöglicht eine Bereitstellung eines Bauelementes mit zwei hochwertigen Oberflächen. Das zweite Substrat kann, mit seiner Außenseite, insbesondere wenn das Bauelement ein Fahrzeugteil ausbildet, das für Außenanwendungen konzipiert ist, die Innenfläche des Bauelementes im montierten Zustand bereitstellen. Auch die Außenseite des zweiten Substrates bedarf nach der Fertigung des Bauelementes keiner oder nur einer geringen Nachbearbeitung.

Gemäß einer weiteren vorteilhaften Ausgestaltung der Erfindung ist das zweite Substrat von einem Ringkörper gebildet. Dies ermöglicht eine besonders stabile Bauweise eines zu fertigenden Bauelementes.

Gemäß einer weiteren vorteilhaften Ausgestaltung der Erfindung umfasst das erfindungsgemäße Verfahren den folgenden Schritt:

### Bearbeiten des Formlings zu einem Bauelement.

Als Bearbeitungsschritte kommen diverse Bearbeitungsverfahren in Betracht. Hierzu gehört beispielsweise bedarfsweise ein Trennen oder Abtrennen von Teilen oder Bereichen des Formlings, ggf. auch ein Abtrennen oder Trennen von Abschnitten des Substrats. Hierzu gehört z. B. auch ein Schritt des Reinigens, und/oder ein Schritt einer Oberflächenbearbeitung, insbesondere an der Außenseite des Substrats, beispielsweise ein Aufrauen oder Polieren oder Glätten der Oberfläche, ggf. auch das Anbringen einer zusätzlichen Schicht oder Folie, beispielsweise einer zusätzlichen Funktionsschicht.

Gemäß einer weiteren vorteilhaften Ausgestaltung der Erfindung weist das erste Substrat und/ oder das zweite Substrat eine Wandstärke zwischen 0,05 mm und 13 mm, insbesondere zwischen 0,2 mm und 13 mm, weiter insbesondere zwischen 1 mm und 5 mm auf. Diese Ausführungsform der Erfindung erlaubt ebenfalls einen Rückgriff auf herkömmliche Folien, die bei zahlreichen Verbundwerkstoffen erprobt werden konnten, und deren Tiefzieheigenschaften und Oberflächeneigenschaften hinreichend bekannt und erforscht sind.

Gemäß einer weiteren vorteilhaften Ausgestaltung der Erfindung umfasst die ausgehärtete Partikelschaummasse oder umfasst der ausgehärtete Partikelschaum eine Wandstärke zwischen 0,5 cm und 2 cm, insbesondere zwischen 0,5 cm und 1,5 cm, weiter insbesondere zwischen 0,8 cm und 1,5 cm. Diese Wandstärkenbereiche finden bei den in Rede stehenden Bauteilen überwiegend Anwendung, wobei die Wandstärken partiell auch größer als angegeben und auch kleiner als angegeben ausfallen können. Es kann sich bei den angegebenen Werten also insbesondere um Mittelwerte handeln. Beispielsweise werden größere Wandstärken erforderlich, wenn Anschraub-Dome oder Befestigungsbereiche oder Verstärkungsbereiche vorgesehen sind, die von der individuellen Geometrie des zu fertigenden Bauteils abhängen.

In Abhängigkeit von den geforderten Festigkeiten des angefertigten Bauelementes wird die Wandstärke der ausgehärteten Partikelschaummasse berechnet und ausgelegt. Trotz der verhältnismäßig großen Wandstärken kann das endgefertigte Bauelement ein nur sehr geringes Gewicht aufweisen.

Gemäß einer weiteren vorteilhaften Ausgestaltung der Erfindung ist das Bauelement als ein Fahrzeugteil für ein Kfz, oder für ein Nutzfahrzeug, oder für ein Caravan-Fahrzeug ausgebildet, und ist beispielsweise ein Innenausstattungsteil, oder eine Laderaumabdeckung, oder ein Verkleidungsteil, oder eine Motorhaube, oder ein Dachelement, oder ein Dachsegment, Hutze, Schlafraumerweiterung, oder eine Fahrzeugwand, oder ein Fahrzeugwandelement.

Gemäß einer weiteren vorteilhaften Ausgestaltung der Erfindung umfasst das granulare Ausgangsmaterial expandierbares EPS, expandierbares EPP oder expandierbares PEEK. Es handelt sich hier sämtlich um Materialien, die aufschäumbar, d. h. expandierbar sind, und die sich gemäß der Erfindung dazu eignen, zunächst nur teilweise aufgeschäumt oder expandiert zu werden, um nachfolgend noch einen Schritt der Endausschäumung oder Endexpansion in einem Werkzeug zu durchlaufen.

Gemäß einer weiteren vorteilhaften Ausgestaltung der Erfindung ist das Ausgangsmaterial von expandierbarem EPS, PP, ABS, PPSU, PSU oder PEEK bereitgestellt.

Gemäß einer weiteren vorteilhaften Ausgestaltung der Erfindung umfasst das Verfahren den Schritt:
m) Positionieren von Verstärkungselementen, insbesondere nach Art von Zugankern, beispielweise nach Art von Tapes, in dem Unterwerkzeug, wobei nach dem Verbringen der Partikel in das Werkzeug die Partikel die Verstärkungselemente umhüllen.

Gemäß einer weiteren vorteilhaften Ausgestaltung der Erfindung ist das erfindungsgemäße Verfahren dadurch gekennzeichnet, dass zwischen den Schritten e) und f) der folgende Schritt durchgeführt wird:
n) Positionieren von Verstärkungselementen, insbesondere nach Art von Zugankern, beispielsweise nach Art von Tapes, in der Kavität zwischen dem ersten Substrat und dem zweiten Substrat, wobei nach dem Zuführen der Partikel in die Kavität diese die Verstärkungselemente umhüllen.

Gemäß dieser vorteilhaften Ausgestaltung der Erfindung wird die endaufgeschäumte, expandierte Partikelschaummasse durch Verstärkungselemente verstärkt oder versteift. Diese sind insbesondere so ausgebildet, dass sie Zugkräfte in einer Richtung quer zur flächenhaften Erstreckung des Bauelementes übertragen können. Hierdurch kann die Steifigkeit des Bauelementes erhöht werden. Von der Erfindung ist auch umfasst, wenn sich die Verstärkungselemente entlang der Erstreckungsrichtung des flächenhaft ausgebildeten Bauelementes erstrecken. Dabei können beispielsweise auch flächenhafte Gebilde wie Matten, Gelege, Gewirke etc. aus Verstärkungsfasern, beispielsweise aus Glasfasern, Carbonfasern, Aramidfasern, Basaltfasern oder anderen geeigneten Verstärkungsfasern, in die Kavität vor dem Verfüllen mit Partikeln eingelegt werden.

Gemäß einer vorteilhaften Ausgestaltung der Erfindung ist eines der beiden Substrate schalenförmig ausgebildet und weist einen Kragen auf, der eine Öffnung umgibt, wobei infolge der Durchführung des Schrittes f) das andere der beiden Substrate in die Öffnung hinein einsetzbar ist. Diese Ausgestaltung der Erfindung ermöglicht eine Fertigung eines Bauelementes mit einem ersten Substrat und einem zweiten Substrat, wobei das eine der beiden Substrate einen Kragen aufweist und das andere der beiden Substrate in eine durch den Kragen gebildete Öffnung hinein eingesteckt oder eingedrückt werden kann. Dies erleichtert eine Fertigung des Bauteils und ermöglicht eine optimierte Durchführung des erfindungsgemäßen Verfahrens.

Gemäß einer vorteilhaften Ausgestaltung der Erfindung umgibt nach Durchführung des Schrittes f) der Kragen des einen Substrates einen Rand des anderen Substrates. Diese Ausgestaltung der Erfindung ermöglicht eine besonders vorteilhafte Durchführung des erfindungsgemäßen Verfahrens.

Gemäß einer vorteilhaften Ausgestaltung der Erfindung verbleibt zwischen dem Kragen des einen Substrates und dem Rand des anderen Substrates nach dem Schließen des Werkzeuges ein Entlüftungsspalt. Diese Ausgestaltung ermöglicht, dass eine Befüllung der zwischen den beiden Substraten gebildeten Kavität mit Partikeln aus Partikelschaum einfach, schnell und sicher gewährleistet ist. Der Entlüftungsspalt kann eine beliebige Geometrie aufweisen und ermöglicht ein Ausweichen der Druckluft beim Befüllen und damit eine Befüllung der Kavität mit sehr hohem Druck.

Gemäß einer vorteilhaften Ausgestaltung der Erfindung sind beide Substrate schalenförmig ausgebildet, und nesten miteinander. Diese Ausgestaltung ermöglicht eine besonders optimierte Durchführung des erfindungsgemäßen Verfahrens.

Die Erfindung bezieht sich des Weiteren auf ein Verfahren nach Anspruch 14.

Wiederum liegt der Erfindung die Aufgabe zugrunde, ein Verfahren anzugeben, mit dem ein flächenhaftes Bauelement gefertigt werden kann, welches den Anforderungen an ein geringes Gewicht und eine hohe Steifigkeit gerecht wird, und welches preisgünstig gefertigt werden kann.

Die Erfindung löst diese Aufgabe mit den Merkmalen des Anspruches 14.

Das Prinzip der Erfindung besteht im Wesentlichen darin, im Unterschied und/oder in Ergänzung zu dem zuvor beschriebenen Verfahren eine Werkzeugschließung in zwei Schritten vorzusehen.

Zunächst wird das Werkzeug in eine Vor-Schließposition verfahren, in der die beiden Substrate eine Kavität zwischen sich bilden, die mit Partikeln befüllt werden kann. Nach dem Befüllen der Kavität und dem Heizen der beiden Werkzeughälften schmelzen die Partikel an oder erweichen. Nach einer vorgegebenen Zeit und/oder nach Durchlaufen eines vorbestimmten Temperaturprofils wird das Werkzeug aus der Vor-Schließposition in eine End-Schließposition verfahren. Wenn das Werkzeug die End-Schließposition erreicht hat, und eine Komprimierung der angeschmolzenen oder erweichten Partikel durchgeführt hat, wird das Werkzeug weiter geheizt, bis die Partikel endaufschmelzen bzw. miteinander verbacken. Nachfolgend kann der Vorgang des Heizens des Werkzeuges beendet werden oder das Werkzeug gekühlt werden und die Partikelschaummasse härtet aus. Danach kann das Werkzeug geöffnet werden und der Formling kann entnommen werden.

Das Werkzeug vollführt gemäß dieser Lehre eine Schließbewegung mit zumindest zwei Hüben. Ein erster Schließungshub wird bis zum Erreichen einer Vor-Schließposition durchgeführt. Nach dem Befüllen der Kavität mit Partikeln und dem Anschmelzen der Partikel erfolgt ein weiterer Komprimierungshub, um die Partikelmasse zu komprimieren. Der Komprimierungshub wird zu einem Zeitpunkt durchgeführt, zu dem die Partikel bereits angeschmolzen, oder teilweise aufgeschmolzen oder erweicht sind.

Dies ermöglicht eine Werkzeugschließung unter Aufbringung nur geringer Schließkräfte. Hierdurch wird das Werkzeug nicht in dem Maße beansprucht, in dem es beansprucht werden müsste, um eine vergleichbare Komprimierung der Partikel zu erreichen, wenn die Partikel nicht angeschmolzen oder erweicht wären. Dadurch wird zum Beispiel die Standzeit des Werkzeuges erhöht. Außerdem ermöglicht diese Erfindung eine Erzielung sehr hoher Dichten der Partikelschaummasse. Schließlich kann das Werkzeug konstruktiv weniger aufwendig ausgelegt werden.

Gemäß einer vorteilhaften Ausgestaltung der Erfindung erfolgt infolge einer Durchführung des Schrittes j) eine Komprimierung der Partikel auf eine Dichte hin, die mindestens oder etwa doppelt so hoch, insbesondere mindestens oder etwa dreimal so hoch, weiter insbesondere mindestens oder etwa viermal so hoch ist, wie die Dichte der Partikel in unkomprimiertem Zustand. Diese Ausgestaltung der Erfindung ermöglicht die Erzielung sehr hoher Dichten in der Partikelschaummasse und damit die Erzielung sehr formsteif ausgebildeter, kompakt bauender Bauelemente.

Gemäß einer vorteilhaften Ausgestaltung der Erfindung erfolgt infolge einer Durchführung des Schrittes j) eine Komprimierung der Partikel auf eine Dichte von mehr als oder etwa 100 kg/m³, insbesondere auf eine Dichte von mehr als oder etwa 150 kg/m³, weiter insbesondere auf eine Dichte von mehr als oder etwa 200 kg/m³. Diese Ausgestaltung der Erfindung ermöglicht die Erzielung sehr hoher Dichten in der Partikelschaummasse und damit die Erzielung sehr formsteif ausgebildeter, kompakt bauender Bauelemente.

Die Erfindung betrifft gemäß einem weiteren Aspekt ein flächenhaft ausgebildetes Bauelement nach Anspruch 15.

Der Erfindung liegt die Aufgabe zugrunde, ein Bauelement anzugeben, welches bei nur geringem Gewicht eine hohe Festigkeit und Tragfähigkeit aufweist, und preisgünstig fertigbar ist.

Die Erfindung löst diese Aufgabe mit den Merkmalen des Anspruches 15.

Zur Vermeidung von Wiederholungen wird bezüglich der Erklärung und Erläuterung der Merkmale des Anspruches 15 sowie zur Erläuterung der Erfindung nach Anspruch 15 auf die vorherigen Ausführungen zu den Ansprüchen 1 bis 14 in analoger Weise verwiesen.

Gemäß der Erfindung wird ein Bauelement bereitgestellt, dessen Oberfläche allseitig, oder im Wesentlichen allseitig, von der Außenfläche des ersten Substrates bzw. des zweiten Substrates bereitgestellt wird. Dies erlaubt eine effiziente, preiswerte Fertigung eines leichtbauendes Sandwich-Bauelementes.

Gemäß einer Ausgestaltung der Erfindung ist das erste Substrat und/oder das zweite Substrat von einer Folie mit einer Wandstärke zwischen 0,05 mm und 13 mm, insbesondere zwischen 0,2 mm und 13 mm, weiter insbesondere zwischen 1 mm und 5 mm, bereitgestellt. Diese Ausführungsform ermöglicht eine besonders einfache Fertigung und die Bereitstellung eines stabilen, robusten Bauelementes, das leichtbauend ist und eine hochwertige Oberfläche aufweist.

Gemäß einer weiteren Ausgestaltung der Erfindung weist der ausgehärtete Partikelschaum eine Wandstärke zwischen 0,5 cm und 2 cm, insbesondere zwischen 0,8 cm und 1,5 cm auf.

Gemäß einer weiteren Ausgestaltung der Erfindung ist der Partikelschaum gegen die beiden Substrate geschäumt. Diese Ausgestaltung der Erfindung ermöglicht eine besonders leichte, stabile und biegesteife Sandwich Konstruktion eines Bauelementes.

Gemäß einer weiteren Ausgestaltung der Erfindung ist das erste Substrat von einem Tiefziehteil gebildet. Diese Ausgestaltung der Erfindung ermöglicht die Anwendung eines einfachen Fertigungsverfahrens und eine stabile Bauweise eines erfindungsgemäßen Bauelementes.

Gemäß einer weiteren Ausgestaltung der Erfindung ist das zweite Substrat von einem Tiefziehteil gebildet. Diese Ausgestaltung der Erfindung ermöglicht einen Rückgriff auf herkömmliche Fertigungsverfahren von Substraten.

Gemäß einer weiteren Ausgestaltung der Erfindung ist das erste Substrat von einem Kunststoff-Spritzgussteil bereitgestellt. Diese Ausgestaltung der Erfindung ermöglicht einen Rückgriff auf herkömmliche Fertigungsverfahren für Substrate.

Gemäß einer weiteren Ausgestaltung der Erfindung ist das zweite Substrat von einem Kunststoff-Spritzgussteil bereitgestellt. Diese Ausgestaltung der Erfindung ermöglicht einen Rückgriff auf herkömmliche Fertigungsverfahren von Substraten.

Gemäß einer weiteren Ausgestaltung der Erfindung besteht das erste Substrat und/ oder das zweite Substrat aus einem thermoplastischen Material, und insbesondere ABS oder PMMA oder aus einem Co-Extrudat aus ABS oder PMMA oder aus ABS, Polycarbonat und PMMA. Diese Ausgestaltung der Erfindung ermöglicht einen Rückgriff auf herkömmliche Fertigungsverfahren von Substraten.

Gemäß einer weiteren Ausgestaltung der Erfindung ist das erste Substrat vollflächig durchgehend ausgebildet. Diese Ausgestaltung der Erfindung ermöglicht einen Rückgriff auf herkömmliche Ausgangsmaterialien für Substrate.

Gemäß einer weiteren Ausgestaltung der Erfindung ist das zweite Substrat mit Ausnahme des wenigstens einen Durchbruches vollflächig durchgehend ausgebildet. Diese Ausgestaltung der Erfindung ermöglicht die Fertigung eines Bauelementes, dessen Oberfläche keiner Bearbeitung mehr bedarf.

Gemäß einer weiteren Ausgestaltung der Erfindung ist das zweite Substrat von einem Ringkörper gebildet ist. Diese Ausgestaltung der Erfindung ermöglicht die Fertigung eines Bauelementes, das höchstens einer geringfügigen Nachbearbeitung bedarf.

Gemäß einer weiteren Ausgestaltung der Erfindung ist das Bauelement als Fahrzeugteil für ein Kfz oder für ein Nutzfahrzeug oder für ein Caravan-Fahrzeug, wie Innenausstattungsteil, Laderaumabdeckung, Verkleidungsteil, Motorhaube, Dachelement oder Dachsegment, Hutze, Schlafraumerweiterung, Fahrzeugwand, oder Fahrzeug-Wandelement, ausgebildet. Diese Ausgestaltung der Erfindung ermöglicht die Bereitstellung eines sehr robust bauenden Fahrzeugteils.

Gemäß einer weiteren Ausgestaltung der Erfindung ist das Ausgangsmaterial von expandierbarem EPS, PP, PPSU, PSU, ABS oder PEEK bereitgestellt. Diese Ausgestaltung der Erfindung ermöglicht eine Bereitstellung eines sehr kompakten, leicht bauenden und zu fertigenden Fahrzeugteiles.
Gemäß einer vorteilhaften Ausgestaltung der Erfindung weist der Partikelschaum eine Dichte von mehr als oder etwa 100 kg/m³, insbesondere eine Dichte von mehr als oder etwa 150 kg/m³, weiter insbesondere eine Dichte von mehr als oder etwa 200 kg/m³, auf. Diese Ausgestaltung der Erfindung ermöglicht die Erzielung sehr formstabiler und formsteifer Bauelemente.

Weitere Vorteile der Erfindung ergeben sich aus den nicht zitierten Unteransprüchen, sowie anhand der nachfolgenden Beschreibung der in den Zeichnungen dargestellten Ausführungsbeispiele.

Darin zeigen:
- Fig. 1: In einer schematischen Prinzipdarstellung ein Behältnis, in das granulares Ausgangsmaterial eines Partikelschaums eingefüllt wird,
- Fig. 2: das Behältnis der Fig. 1, wobei die eingeführten Partikel unter Einwirkung von Infrarot-Strahlungsleistung aufgeschäumt worden sind,
- Fig. 3: ein erstes Substrat in flachliegendem Zustand und ein erstes Tiefziehwerkzeug in geöffnetem Zustand,
- Fig. 4: in einer Darstellung gemäß Fig. 3 das Werkzeug in geschlossenem Zustand und das tiefgezogene erste Substrat,
- Fig. 5: das erste tiefgezogene Substrat der Fig. 4 in einer teilgeschnittenen Alleindarstellung,
- Fig. 6: das erste Substrat gemäß Ansichtspfeil VI der Fig. 5 in Draufsicht,
- Fig. 7: ein zweites Tiefziehwerkzeug und ein zweites Substrat, das sich noch in einem flachliegenden Zustand befindet,
- Fig. 8: das geschlossene zweite Tiefziehwerkzeug gem. Fig. 7 und das tiefgezogene zweite Substrat,
- Fig. 9: das tiefgezogene zweite Substrat der Fig. 8 in einer teilgeschnittenen Alleindarstellung,
- Fig. 10: eine Draufsicht auf das tiefgezogene zweite Substrat etwa entlang Ansichtspfeil X in Fig. 9,
- Fig. 11: das tiefgezogene zweite Substrat nach Anbringung eines Durchbruches,
- Fig. 12: das aus zwei Werkzeughälften bestehende Werkzeug mit einer Befüllöffnung in einem teilweise geöffneten Zustand,
- Fig. 13: das Werkzeug der Fig. 12 und das erste Substrat sowie das zweite Substrat in einem Zwischenmontagezustand,
- Fig. 14: das geschlossene Werkzeug der Fig. 13, wobei das erste Substrat an die erste Werkzeughälfte und das zweite Substrat an die zweite Werkzeughälfte angesetzt ist,
- Fig. 15: den Prozess des Befüllens des Werkzeuges der Fig. 14 mit Partikeln,
- Fig. 16: das Heizen des Werkzeuges,
- Fig. 17: das gebildete Bauteil aus verbackener und ausgehärteter Partikelschaummasse,
- Fig. 18: das Bauelement der Fig. 17 in Alleindarstellung nach Entnahme aus dem Werkzeug in teilgeschnittener schematischer Ansicht,
- Fig. 19: das Bauelement der Fig. 18 nach Abtrennung von Werkstoffbereichen der beiden Substrate, etwa entlang der in Fig. 18 gestrichelt dargestellten Trennlinie,
- Fig. 20: ein weiteres Ausführungsbeispiel eines zweiten Substrates, das als Ringkörper ausgebildet ist,
- Fig. 21: das Ausführungsbeispiel der Fig. 20 in Draufsicht, etwa entlang Ansichtspfeil XXI in Fig. 20,
- Fig. 22: ein geschlossenes Werkzeug mit eingesetztem ersten Substrat und dem Ausführungsbeispiel des zweiten Substrates gemäß Fig. 20,
- Fig. 23: ein Ausführungsbeispiel eines erfindungsgemäßen gefertigten Bauelementes unter Verwendung eines zweiten Substrates gemäß Fig. 20, nach dem Abtrennen von Werkstoffbereichen gemäß Fig. 22,
- Fig. 24: geänderte Ausführungsformen eines ersten Substrates und eines zweiten Substrates,
- Fig. 25: ein Werkzeug, in das die beiden Substrate gemäß Fig. 24 eingesetzt sind, bei geöffnetem Werkzeug,
- Fig. 26: das geschlossene Werkzeug der Fig. 25,
- Fig. 27: das unter Verwendung der beiden Substrate gem. Fig. 24 generierte Bauelement nach dem Einfüllen und Verbacken der Partikel,
- Fig. 28: das gefertigte Bauelement der Fig. 27 in Alleindarstellung,
- Fig. 29: ein weiteres Ausführungsbeispiel eines Werkzeuges in geöffnetem Zustand in einer befüllten Position, in der die beiden Werkzeughälften voneinander beabstandet sind, wobei dieses Werkzeug die Möglichkeit einer Kompression bereitstellt, sowie zusätzlich eine Verschlussklappe für die Befüllöffnung,
- Fig. 30: das Ausführungsbeispiel des Werkzeuges der Fig. 29, nach dem vollständigen Schließen des Werkzeuges unter Kompression der Partikel in ausgehärtetem Zustand,
- Fig. 31: ein weiteres Ausführungsbeispiel der Erfindung in einer Darstellung gemäß Fig. 13, mit einem gegenüber Fig. 13 geändert ausgestalteten zweiten Substrat, wobei das zweite Substrat in eine Öffnung eines von dem ersten Substrates bereitgestellten Kragens hinein eintauchen kann,
- Fig. 32: das Ausführungsbeispiel der Fig. 31 in einer Darstellung und in einem Zustand gemäß Fig. 14, bei geschlossenem Werkzeug, vor der Befüllung,
- Fig. 33: das Ausführungsbeispiel der Fig. 31 in einer Darstellung und in einem Zustand gemäß Fig. 14, während der Befüllung,
- Fig. 33a: in einer vergrößerten, teilgeschnittenen, schematischen Ansicht etwa gemäß Teilkreis XXXllla in Fig. 33 einen Verbindungsbereich zwischen dem ersten Substrat und dem zweiten Substrat unter Illustration eines Entlüftungsspaltes,
- Fig. 33b: in einer Darstellung gemäß Fig. 33a ein geändertes Ausführungsbeispiel mit einem geänderten Entlüftungsspalt,
- Fig. 34: das Ausführungsbeispiel der Fig. 31 in einer Darstellung und in einem Zustand gemäß Fig. 16, nach der Befüllung mit Partikeln vor dem Heizen des Werkzeuges,
- Fig. 35: das Ausführungsbeispiel des fertiggestellten Bauelementes der Fig. 31 in Alleindarstellung und in einem Zustand gemäß Fig. 18, nach dem Verbacken der Partikel und nach Entnahme aus dem Werkzeug,
- Fig. 36: in einer Darstellung gemäß Fig. 13 ein weiteres Ausführungsbeispiel der Erfindung mit zwei Substraten, die schalenförmig und miteinander nestbar ausgebildet sind, wobei das erste Substrat einen Kragen aufweist, der eine Öffnung umgibt, in den hinein das zweite Substrat mit einem Eintauchabschnitt eintauchen kann,
- Fig. 37: das Ausführungsbeispiel der Fig. 36 in einer Darstellung und in einem Zustand gemäß Fig. 14,
- Fig. 38: das Ausführungsbeispiel der Fig. 36 in einer Darstellung und in einem Zustand gemäß Fig. 15,
- Fig. 39: das Ausführungsbeispiel der Fig. 36 in einer Darstellung und in einem Zustand gemäß Fig. 16,
- Fig. 40: das gefertigte Bauelement des Ausführungsbeispiels der Fig. 36 in Alleindarstellung und in einem Zustand gemäß Fig. 18,
- Fig. 41: ein weiteres Ausführungsbeispiel einer erfindungsgemäßen Vorrichtung in einer Darstellung und in einem Zustand gemäß Fig. 31,
- Fig. 42: das Ausführungsbeispiel der Fig. 41 mit einem in einer Vor-Schließposition befindlichen Werkzeug, wobei das zweite Substrat in eine von einem Kragen des ersten Substrates bereitgestellte Öffnung eintaucht,
- Fig. 43: das in der Vor-Schließposition gemäß Fig. 42 befindliche Werkzeug während der Befüllung der von den beiden Substraten gebildeten Kavität mit Partikeln eines Partikelschaums,
- Fig. 44: das Ausführungsbeispiel der Fig. 43 nach dem vollständigen Befüllen mit Partikeln und nach dem Anschmelzen oder Aufweichen der Partikel infolge eines ersten Heizschrittes,
- Fig. 45: das Ausführungsbeispiel der Fig. 44 mit einem unter Komprimierung der erweichten Partikel aus der Vor-Schließposition in eine End- Schließposition verfahrenen Werkzeug,
- Fig. 46: das Ausführungsbeispiel der Fig. 45 nach Durchführung eines zweiten Heizschrittes und nach dem Erwärmen und nachfolgenden Verbacken der komprimierten Partikel der Partikelschaummasse, und
- Fig. 47: das endfertig hergestellte Bauelement in Alleindarstellung in einer Darstellung gemäß Fig. 18.

Die Ausführungsbeispiele der Erfindung werden anhand der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

Ein Verfahren zur Herstellung eines in seiner Gesamtheit in den Zeichnungen mit dem Bezugszeichen 10 dargestellten Bauelement wird nachfolgend anhand der Figuren illustriert.

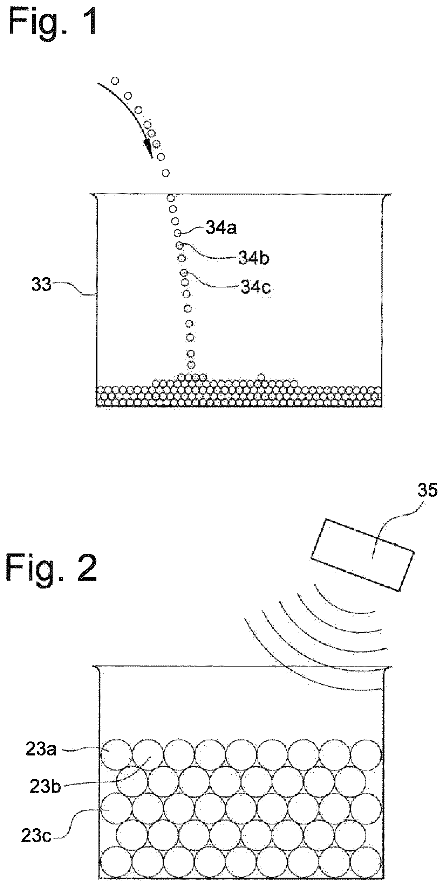

Figur 1 zeigt ein Behältnis 33, das mit unaufgeschäumten Partikeln 34a, 34b, 34c eines aufschäumbaren Partikelschaums befüllt wird. Die eingefüllten Partikel 34a, 34b, 34c werden unter Einfluss der Strahlungsleistung einer IR-Heizung 35, gemäß Figur 1, aufgeschäumt und erreichen, wie in Figur 2 dargestellt, ein erheblich vergrößertes Volumen. Die aufgeschäumten Partikel 23a, 23b, 23c sind noch immer granulare Partikel, also lose, und somit nicht miteinander verbunden.

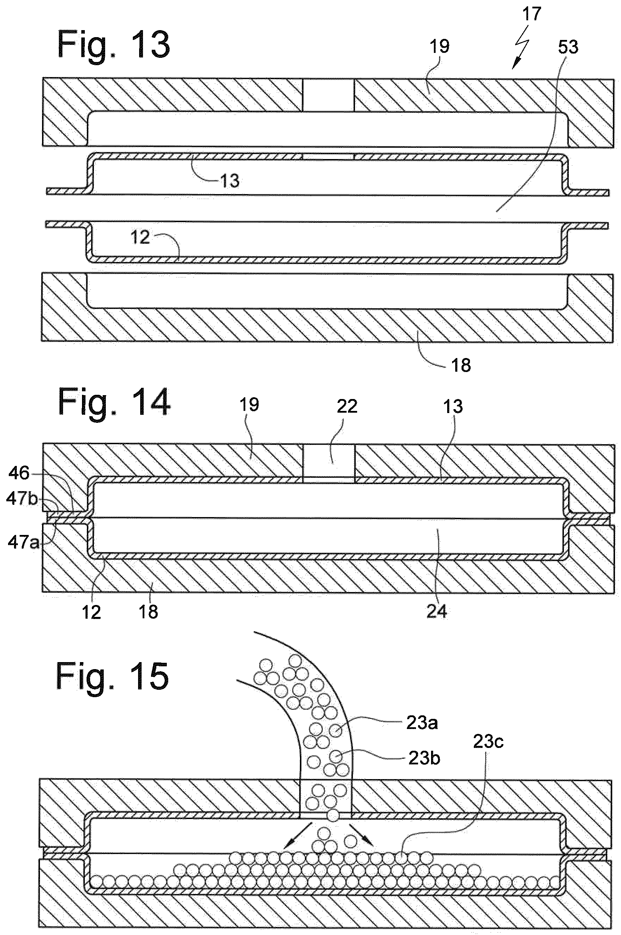

Figur 2 zeigt die Partikel 23a, 23b, 23c in einem teilweise voraufgeschäumten Zustand oder in einem endaufgeschäumten Zustand. Die endaufgeschäumten Partikel oder voraufgeschäumten Partikel werden später, wie dies Figur 15 andeutet, weiterverwendet.

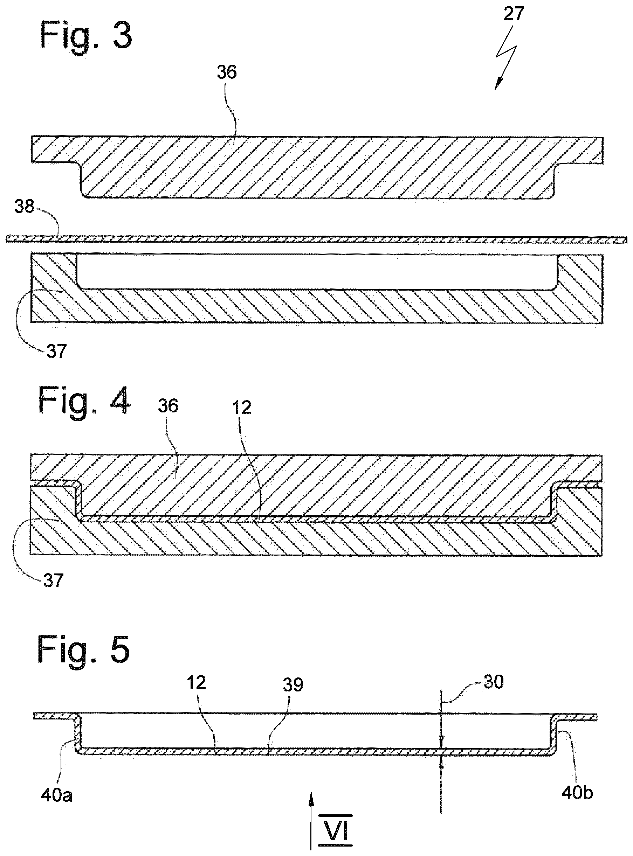

Zunächst soll anhand der Figuren 3 bis 6 die Fertigung eines Ausführungsbeispiels eines ersten Substrates 12 erläutert werden.

Figur 3 zeigt im geöffneten Zustand ein erstes Tiefziehwerkzeug 27, das ein Werkzeugoberteil 36 und ein Werkzeugunterteil 37 aufweist. Figur 3 zeigt ein Ausgangsmaterial 38 für ein erstes Substrat 12, das noch in einem flachliegenden, im wesentlichen bahnförmigen oder plattenförmigen Zustand bereitgestellt ist. Infolge einer Werkzeugschließung wird das Ausgangsmaterial 38 tiefgezogen.

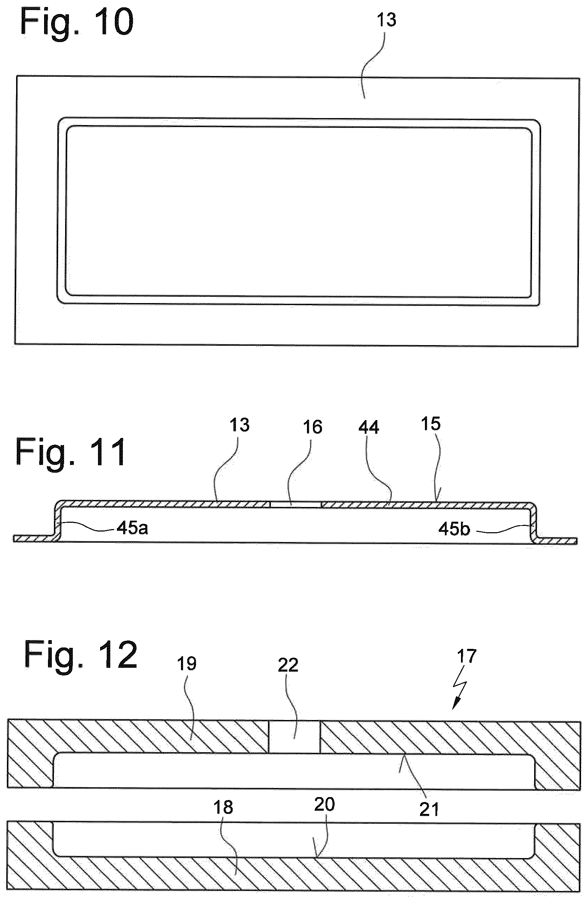

Figur 4 zeigt den geschlossenen Werkzeugzustand und das tiefgezogene erste Substrat 12. Figur 12 zeigt dieses Substrat 12 in Alleindarstellung. Das Substrat 12 umfasst eine Bodenwand 39 und umlaufende Seitenwände 40a, 40b. Die Kontur ist freilich beliebig. Insbesondere ist das erste Substrat 12 schalenförmig ausgebildet.

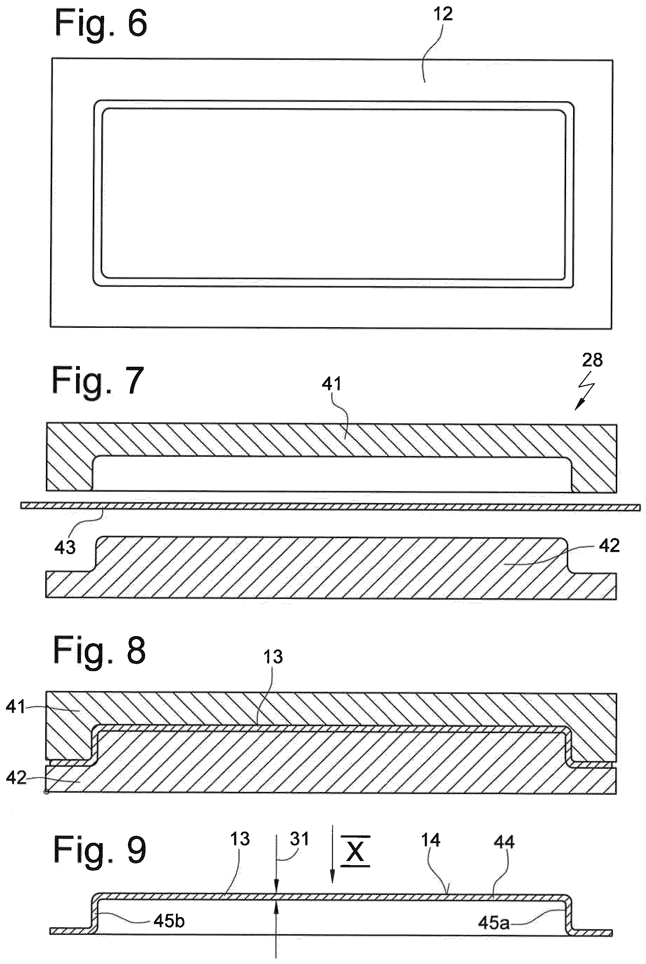

Gemäß der Figuren 7 bis 10 wird die Fertigung eines Ausführungsbeispiels eines zweiten Substrates 13 erläutert.

Figur 7 zeigt den geöffneten Zustand eines zweiten Tiefziehwerkzeuges 28 und ein flachliegendes Ausgangsmaterial 43 für das zu fertigende zweite Substrat 13.

Figur 8 zeigt das zweite Tiefziehwerkzeug 28 in geschlossenem Zustand. Wiederum wird die Geometrie der Werkzeugform auf das Ausgangsmaterial 43 infolge des Tiefziehvorganges aufgeprägt. Figur 8 zeigt das tiefgezogene zweite Substrat 13.

Dieses zweite Substrat 13 zeigt Figur 9 in Alleindarstellung und Figur 10 in Draufsicht.

Auch das zweite Substrat 13 ist im Wesentlichen schalenförmig ausgebildet. Das zweite Substrat 13 umfasst eine Bodenwand 44 und Seitenwandabschnitte 45a, 45b.

Figur 11 zeigt, dass in das gefertigte zweite Substrat 13 eine zentrale Öffnung, der sogenannte Durchbruch 16, eingearbeitet wird. Der Durchbruch 16 wird nachfolgend erläutert.

Bei weiteren, nicht dargestellten Ausführungsbeispielen der Erfindung kann das zweite Substrat 13 auch mehrere Durchbrüche 16 aufweisen. Angemerkt sei, dass das erste Substrat 12 bei den überaus meisten Ausführungsbeispielen der Erfindung keinen Durchbruch aufweist.

Es wird angemerkt, dass der Durchbruch 16 auch im Zuge des Tiefziehvorganges in das zweite Substrat 13 mit eingearbeitet werden kann.

Auch sei an dieser Stelle angemerkt, dass die Figuren 1 bis 10 die Fertigung eines ersten Substrates 12 und eines zweiten Substrates 13 durch einen Tiefziehvorgang beschreiben.

Von der Erfindung sind alternativ aber auch Ausführungsbespiele umfasst, bei denen das erste Substrat 12 und/ oder das zweite Substrat 13 von einem Kunststoffspritzgussteil bereitgestellt sind.

Das erste Substrat 12 weist eine Wandstärke 30 und das zweite Substrat 13 eine Wandstärke 31 auf.

Im Folgenden wird anhand der Ausführungsbeispiele der Figuren 12 bis 19 erläutert, wie gemäß dem erfindungsgemäßen Verfahren, unter Verwendung der Ausführungsbeispiele eines ersten Substrates 12 und eines zweiten Substrates 13 gemäß der Figuren 1 bis 11, ein erfindungsgemäßes Bauelement 10 gefertigt wird.

Figur 12 zeigt ein Werkzeug 17, das als Schäumwerkzeug bezeichnet wird.

Das Schäumwerkzeug 17 umfasst eine erste Werkzeughälfte 18 und eine zweite Werkzeughälfte 19. Figur 12 zeigt das Werkzeug 17 in geöffnetem Zustand.

Die erste Werkzeughälfte 18, die gemäß den Figuren auch als Unterwerkzeug und die zweite Werkzeughälfte 19, die gemäß den Figuren auch als Oberwerkzeug bezeichnet werden könnte, sind relativ zueinander bewegbar.

Die entsprechenden Werkzeugträger und Bewegungseinheiten sind in den Figuren nicht dargestellt.

Die erste Werkzeughälfte 18 umfasst eine erste Innenkontur 20. Diese erste Innenkontur 20 ist formkomplementär zu einer ersten Außenkontur 14 des ersten Substrates 12.

Die zweite Werkzeughälfte 19 umfasst eine zweite Innenkontur 21. Die zweite Innenkontur 21 ist formkomplementär zu einer zweiten Außenkontur 15 des zweiten Substrates 13.

Die beiden Substrate 12, 13, werden also mit einer Geometrie bereitgestellt, die der Geometrie der Werkzeughälften 18 und 19 des Schäumwerkzeuges 17 entspricht.

Figur 13 zeigt einen Zwischenmontagezustand, in dem die beiden Substrate 12,13 in einem Innenraum 53 des Werkzeuges 17 positioniert sind.

Eine Positionierung der beiden Substrate 12, 13 erfolgt bei geöffnetem Werkzeug 17.

Figur 14 zeigt das Schäumwerkzeug 17 in geschlossenem Zustand mit eingesetzten Substraten 12, 13.

Das erste Substrat 12 liegt mit seiner Außenumfangsfläche an der ersten Werkzeughälfte 18 an und das zweite Substrat 13 liegt mit seiner Außenumfangsfläche an der Innenumfangsfläche der zweiten Werkzeughälfte 19 an.

Von Bedeutung ist, dass der Durchbruch 16 des zweiten Substrates 13, wie die Figuren 13,14 zeigen, infolge der Anordnung des zweiten Substrates 13 in der zweiten Werkzeughälfte 19 in Flucht zu der Befüllöffnung 22 in der zweiten Werkzeughälfte 19 angeordnet ist.

Die Befüllöffnung 22 dient der Zufuhr von Partikeln 23a, 23b, wie dies nachfolgend Figur 15 zeigt.

Die zweite Werkzeughälfte 19 kann auch mehrere, nicht dargestellte Befüllöffnungen 22 aufweisen. Diese fluchten dann jeweils mit einem von mehreren Durchbrüchen 16 in dem zweiten Substrat 13.

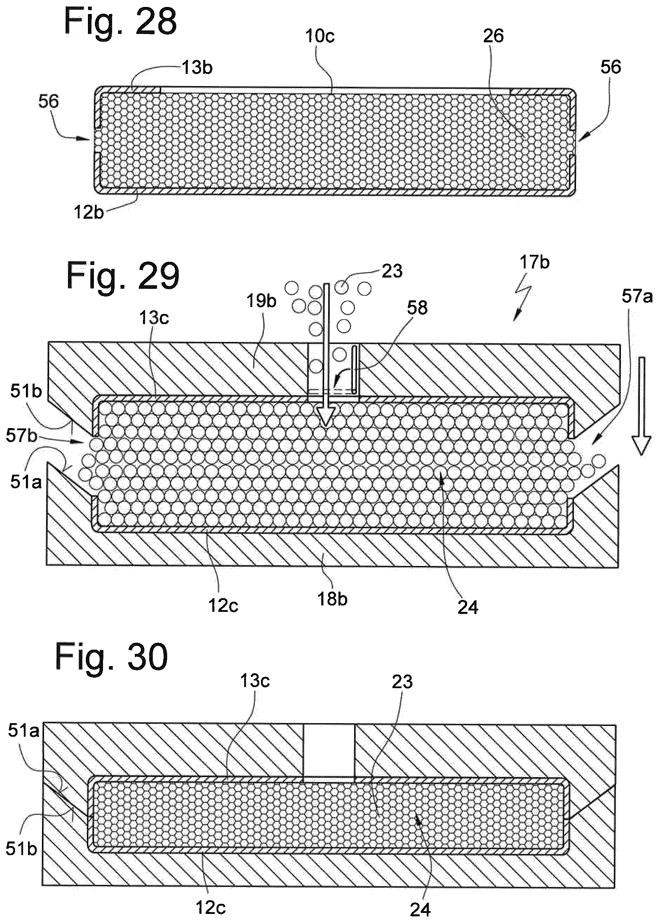

Die Befüllöffnung 22 der zweiten Werkzeughälfte 19 ist mit einem nicht dargestellten Vorrat für die Partikel 23a, 23b, 23c über ein nicht dargestelltes Leitungssystem verbunden. Die Befüllöffnung 22 kann, wie das Ausführungsbeispiel der Fig. 29 andeutet, auch über eine oder mehrere Schließvorrichtungen 58 öffnenbar bzw. verschließbar ausgestaltet sein.

Eine Verlagerung der Partikel 23a, 23b, 23c von dem nicht dargestellten Vorrat zu dem Schäumwerkzeug 17 kann insbesondere druckluftgetrieben bewerkstelligt werden.

Sobald die beiden Substrate 12,13 in die entsprechenden Werkzeughälften 18,19 eingebracht sind, kann das Werkzeug 17 geschlossen werden. Nun kann die von den beiden Substraten 12,13 gebildete Kavität 24 mit Partikeln 23a, 23b, 23c befüllt werden.

Figur 15 zeigt den Befüllvorgang.

Wenn ein entsprechendes Füllvolumen in der Kavität erreicht ist, wird eine weitere Zuführung von Partikeln 23a, 23b, 23c beendet.

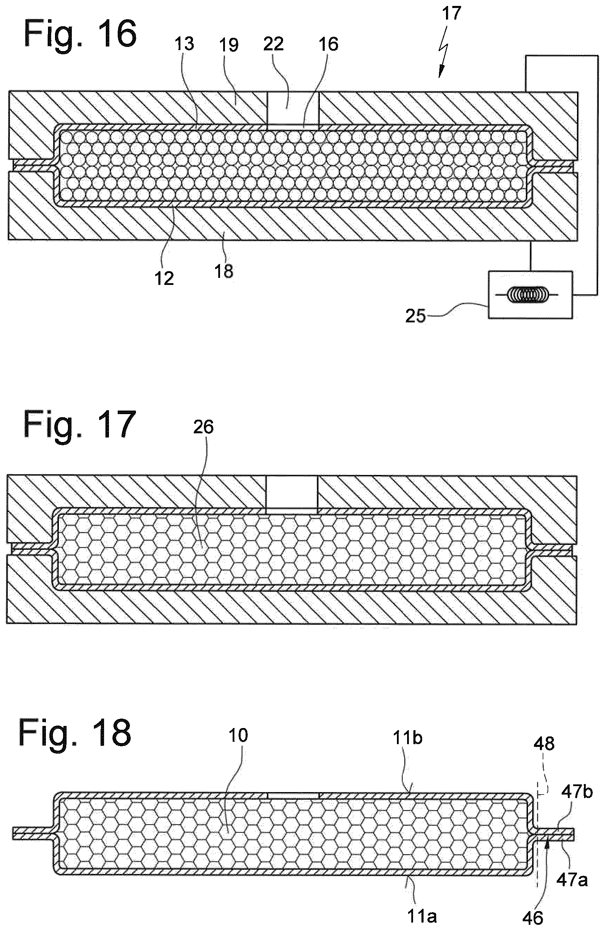

Das Werkzeug 17 ist, wie Figur 16 andeutet, mit einer Heizung 25 ausgestattet. Die Heizung 25 kann das Werkzeug 17 insbesondere einer Temperaturwechselbeanspruchung unterwerfen. Dabei können insbesondere Temperaturen oberhalb einer Schmelztemperatur oder einer Erweichungstemperatur des Partikelschaumes, als auch Temperaturen unterhalb einer Schmelztemperatur oder einer Erweichungstemperatur des Partikelschaumes erreicht werden.

Das Werkzeug 17 kann insbesondere, in Abhängigkeit von dem gewählten Partikelschaummaterial, entlang einer Temperaturrampe auf eine höhere Temperatur gebracht werden, dort über einen gewissen Zeitraum verbleiben, und nachfolgend, wenn die entsprechende einstellbare Heizdauer erreicht ist, wieder gekühlt werden.

Hierzu kann das Werkzeug 17, und zwar sowohl die erste Werkzeughälfte 18, als auch die zweite Werkzeughälfte 19, mit in den Figuren nicht dargestellten Kanälen vorgesehen sein, durch die erhitztes Wasser und/ oder gekühltes Wasser oder ein anderes Heiz- oder Kühlmedium strömbar ist.

Das Werkzeug 17 kann, was in den Figuren ebenfalls nicht dargestellt ist, so konstruiert sein, dass es einer schnellen Temperaturänderung unterworfen werden kann.

Infolge der Heizung des Werkzeugs 17 auf eine Temperatur oberhalb der Schmelztemperatur können die granular in die Kavität 24 eingebrachten Partikel 23a, 23b, 23c aufschmelzen und miteinander und mit den Substraten 12, 13 verbacken.

Der Wärmetransfer erfolgt dabei von den Werkzeughälften 18,19 nach innen, also quer durch das erste Substrat 12 und quer durch das zweite Substrat 13 hindurch, in die Kavität 24 hinein.

Bemerkenswert ist, dass bei dem Aufschmelzen und Verbacken der Partikel 23a, 23b, 23c zu einer Partikelschaummasse 26 keinerlei Wasserdampf benötigt wird. Ein Verbacken der Partikelschaummasse 26 kann daher vollständig "trocken" erfolgen. Es muss insbesondere auch kein Wasserdampf evakuiert werden und es verbleibt auch keinerlei Restfeuchte in dem Bauteil.

Fig. 16 zeigt ein Ausführungsbeispiel, bei dem in dem zweiten Substrat 13 ein Durchbruch 16 und in der zweiten Werkzeughälfte eine Befüllöffnung 22 angeordnet ist. Von der Erfindung ist auch umfasst, wenn in dem zweiten Substrat 13 mehrere Durchbrüche 16 und in der zweiten Werkzeughälfte 19 mehrere Befüllöffnungen 22 angeordnet sind.

Es sei auch angemerkt, dass die Begriffe erste Werkzeughälfte 18 und zweite Werkzeughälfte 19 funktional zu verstehen sind, und eine Trennung des Werkzeugs 17 in zwei Teile beschreiben. Gemeint sind aber nicht aber zwingend zwei halbe Werkzeuge.

Wenn das Heizen der Partikelschaummasse 26 für eine vorgeschriebene Zeitdauer durchgeführt worden ist, und die Partikelschaummasse homogen aufgeschmolzen ist, wird das Werkzeug 17 gekühlt. Die Partikelschaummasse 26 erstarrt sodann und härtet aus.

Nach einer vorgeschriebenen Standzeit kann das Werkzeug 17 geöffnet werden, in dem die beiden Werkzeughälften 18, 19 voneinander wegbewegt werden.

Der Formling, also das fertige Bauteil 10, kann sodann entnommen werden.

Figur 18 zeigt das entnommene Bauteil in Einzeldarstellung.

Bei dem Ausführungsbeispiel gemäß den Figuren 12 bis 18 ist zu erkennen, dass die beiden Substrate 12,13 in ihrem Stoßbereich 46 Überstandsbereiche 47a, 47b aufweisen. Diese können beispielsweise entlang einer in Figur 18 bezeichneten Trennlinie 48 abgetrennt werden.

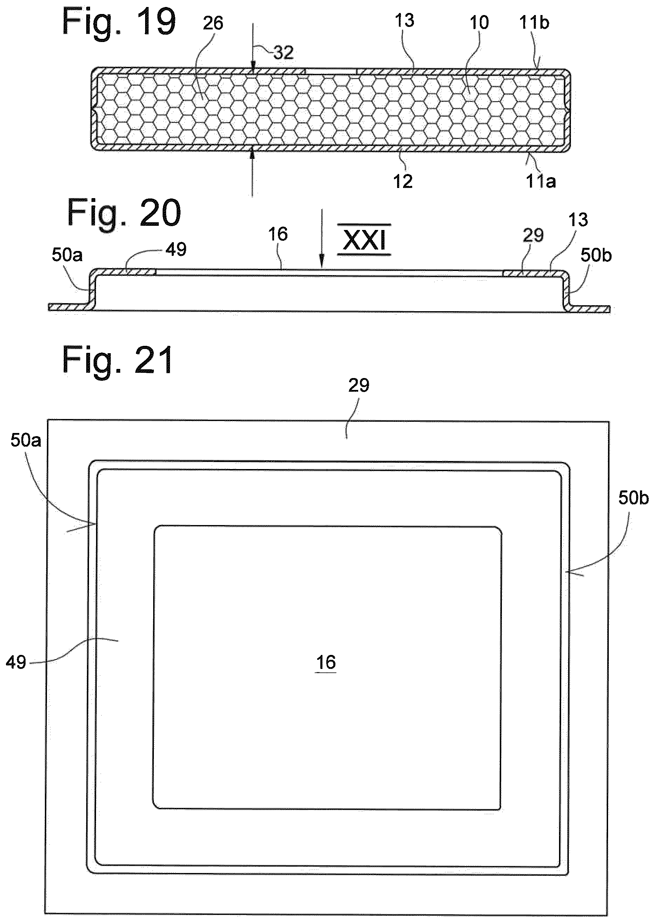

Entsprechend bearbeitete, fertige hergestellte Bauteile 10 zeigt Figur 19 in Alleindarstellung.

Das fertige Bauteil 10 weist eine Wandstärke 32 einer Partikelschaummasse 26 auf, die ausgehärtet ist.

Das fertige Bauteil 10 ist sehr leicht bauend und steif ausgebildet.

Die nach außen gerichteten Flächen des ersten Substrates 12 und des zweiten Substrates 13 bilden die Oberflächen 11a, 11b des Bauelementes 10. Diese sind sehr hochwertig und können z.B. "class A" Oberflächen bereitstellen.

Anhand der Figuren 20 bis 23 wird ein weiteres Ausführungsbeispiel eines erfindungsgemäßen Verfahrens und eines erfindungsgemäßen Bauelementes 10 erläutert.

Der Unterschied zu dem zuvor beschriebenen Ausführungsbeispiel besteht darin, dass das zweite Substrat 13 bei diesem Ausführungsbeispiel von einem Ringkörper 29 gebildet ist.

Dieser weist eine große zentrale Öffnung auf, die den Durchbruch 16 bereitstellt.

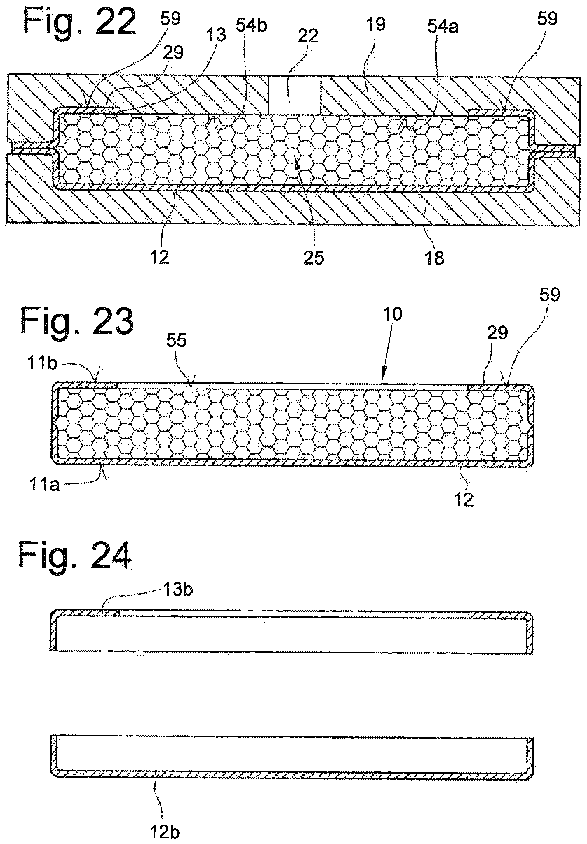

Figur 22 verdeutlicht, dass bei diesem Ausführungsbeispiel Innenwandungsbereiche 54a, 54b der zweiten Werkzeughälfte 19 die Kavität 24 mit begrenzen.

Diese Innenwandungsbereiche 54a, 54b können - anders als in Fig. 22 dargestellt - auch bündig zu der Außenumfangsfläche 59 des zweiten Substrates 13 angeordnet sein.

Das fertig hergestellte Bauelement 10 weist gemäß Figur 23 auf seiner bezogen auf Fig. 23 unteren Seite 11a eine Oberfläche auf, die dem Bauelement 10 gemäß Figur 19 entspricht.

Die Rückseite 11b des Bauelementes wird von einem Ringkörper 29 gebildet und im Mittelbereich von nackten Wandungsbereichen 55 der Partikelschaummasse gebildet.

Anhand des Ausführungsbeispiels der Figuren 24 bis 28 wird ein weiteres Ausführungsbeispiel eines erfindungsgemäßen Verfahrens und eines erfindungsgemäßen Bauelementes 10 erläutert. Hier sind geringfügig geänderte erste Substrate 12 und zweite Substrate 13 vorgesehen, die bei dem Ausführungsbeispiel der Figuren 24 bis 28 als erstes Substrat 12b und als zweites Substrat 13b bezeichnet sind.

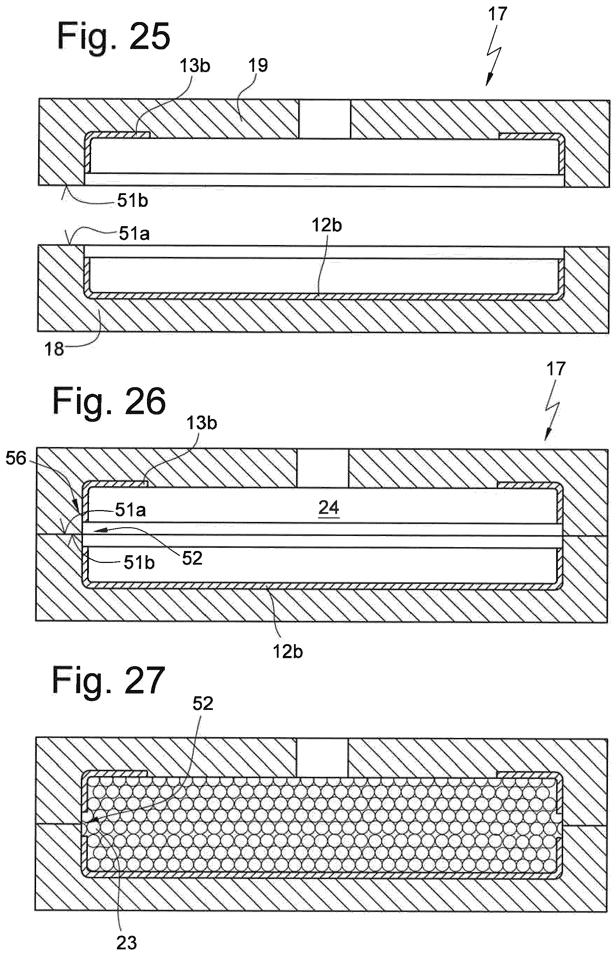

Bei dem Ausführungsbeispiel ist insbesondere bei Betrachtung der Figuren 25 bis 26 erkennbar, dass die erste Werkzeughälfte 18 und die zweite Werkzeughälfte 19 über Werkzeugflächen 51a, 51b verfügen, die bei geschlossenem Werkzeug 17, gemäß Figur 26, in Kontakt geraten.

Der Stoßbereich 56 der beiden Substrate 12b, 13b aneinander umfasst somit einen Freiraum 52 (vgl. Fig. 26) der die Kavität 24 mit begrenzt. Dieser Freiraum 52 wird, wie dies Figur 27 erläutert, ebenfalls mit Partikeln 23a, 23b, 23c ausgefüllt.

In dem Stoßbereich 56 weist das Bauelement 10c gemäß Figur 28 somit ebenfalls eine nackte, nicht von Substratmaterial überdeckte Partikelschaummasse 26 auf.

Anhand der Ausführungsbeispiele der Figuren 29 bis 30 wird eine Kompression der eingeführten Partikel 23 erläutert.

Figur 29 zeigt das Werkzeug 17b in einem teil-geschlossenen Zustand, in dem die beiden Werkzeughälften 18b, 19b noch voneinander beanstandet sind. Die Kavität 24 wird nun mit Partikeln 23 gefüllt.

Im Bereich der Werkzeugnuten 57a, 57b kann eine nicht dargestellte Vorrichtung vorgesehen sein, die die Partikel 23 an einem Austreten aus der Kavität 24 heraus hindert.

Nach Befüllung der Kavität 24 mit Partikeln 23 kann von einer nicht dargestellten Steuerung eine Schließvorrichtung 58 angesprochen werden, die die Befüllöffnung 22 verschließt.

Ausgehend von dem Werkzeugzustand 17 gemäß Figur 29, kann nachfolgend eine weitere Werkzeug-Schließbewegung durchgeführt werden, und zwar beispielsweise bis in einen Zustand gemäß Figur 30 hinein, in der die Werkzeugflächen 51a, 51b einander kontaktieren.

Im Zuge dieser finalen Werkzeugschließung wird die Kavität 24 verkleinert, und damit eine Kompression der Partikel 23 erreicht.

Bei allen Ausführungsformen findet die zuvor beschriebene Beheizung der beiden Werkzeughälften 18, 19 für eine bestimmte Zeitdauer auf eine vorherbestimmte Temperatur statt, insbesondere nachfolgend ein Halten dieser Temperatur, und nachfolgend ein Kühlen der beiden Werkzeughälften 18, 19 auf eine Temperatur unterhalb einer Erweichungstemperatur der Partikelschaummasse.

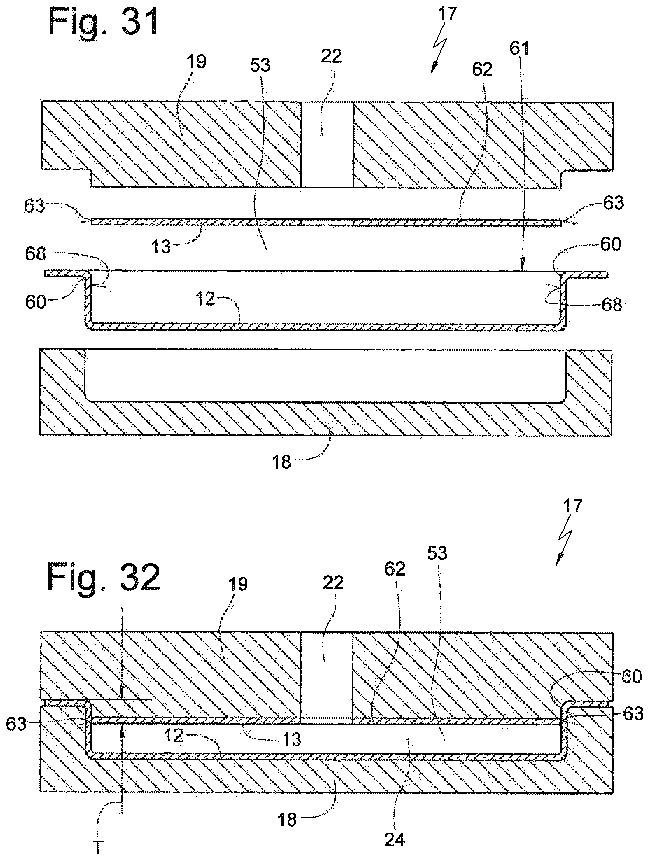

Ein weiteres Ausführungsbeispiel der Erfindung wird nachfolgend anhand der Figuren 31 bis 35 erläutert:
Hier ist im Unterschied zu dem Ausführungsbeispiel der Figuren 13 bis 18 das zweite Substrat 13 nicht schalenförmig ausgebildet, sondern von einem flachliegenden Körper oder von einem im Wesentlichen flachliegenden Körper bereitgestellt.

Die Figuren 31 bis 35 zeigen das zweite Substrat 13 eben ausgebildet. Von der Erfindung ist auch umfasst, wenn das zweite Substrat 13 eine beliebige Kontur im Raum aufweist.

Eine Besonderheit besteht bei diesem Ausführungsbeispiel darin, dass das erste Substrat 12 einen Kragen 60 oder einen Kragenbereich 60 aufweist, der eine Öffnung 61 umschließt.

Das zweite Substrat 13 kann mit einem Eintauchabschnitt 62 in diese Öffnung 61 eingesetzt oder eingesteckt werden.

Das zweite Substrat 13 taucht also - zumindest geringfügig - in eine von dem Kragen 60 des ersten Substrats 12 bereitgestellte Öffnung 61 hinein ein.

Fig. 31 zeigt dieses Ausführungsbeispiel der Erfindung in einer schematischen Vormontageposition. Wie bei den zuvor beschriebenen Ausführungsbeispielen wird das erste Substrat 12 an der ersten Werkzeughälfte 18 und das zweite Substrat 13 an der zweiten Werkzeughälfte 19 festgelegt. Wie bei den vorherigen Ausführungsbeispielen beschrieben und wie auch bei den nachfolgend beschriebenen Ausführungsbeispielen vorgesehen, ist wiederum die Kontur der Werkzeuge 18, 19 an die Kontur der Substrate 12, 13 angepasst.

Nach einer Befestigung der Substrate 12, 13 an der entsprechenden Werkzeughälfte 18, 19 werden die beiden Werkzeughälften 18, 19 aufeinander zu bewegt. Fig. 32 zeigt den Zustand, in dem das Werkzeug 17 geschlossen ist. In diesem Zustand ist das zweite Substrat 13 zumindest teilweise in das erste Substrat 12 hinein eingetaucht.

Die Eintauchtiefe ist in Fig. 32 mit dem Bezugszeichen T bezeichnet.

Die Eintauchtiefe T kann 0 bis einige Millimeter betragen, und gegebenenfalls auch einen oder mehrere Zentimeter.

Es ist von der Erfindung umfasst, wenn das erste Substrat 12 an das zweite Substrat 13 bei geschlossenem Werkzeug 17 lediglich herangesetzt ist, also nur geringfügig eintaucht, oder beginnt, einzutauchen.

Zwischen den beiden Substraten 12, 13 kann auch ein später noch zu erläuternder Entlüftungsspalt, insbesondere in Form eines laufenden Ringspaltes 64, angeordnet sein.

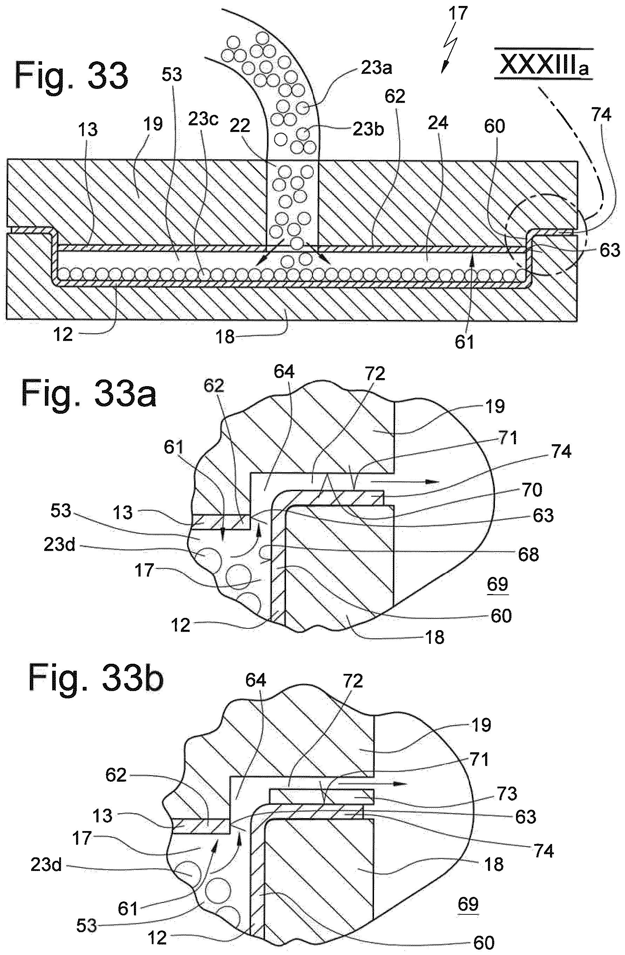

Ausgehend von einem Zustand gemäß Fig. 32 kann die von den beiden Substraten 12, 13 bereitgestellte Kavität 24 mit Partikeln 23a, 23b, 23c, 23d, 23e befüllt werden. Fig. 33 zeigt das Werkzeug 17 und die beiden Substrate 12, 13 in dem Moment der Befüllung.

Die Kavität 24 wird vollständig mit Partikeln 23a, 23b, 23c, 23d, 23e befüllt, was in Fig. 33 nicht dargestellt ist. Die Befüllung mit Partikeln erfolgt unter hohem Druck und ein Transport der Partikel erfolgt unter Zuhilfenahme von Druckluft. Die Druckluft kann über einen in Fig. 33 nicht dargestellten Entlüftungsspalt 64 entweichen.

Nach dem Befüllen wird das Werkzeug 18, 19 geheizt. Insbesondere werden beide Werkzeughälften 18, 19 temperiert.

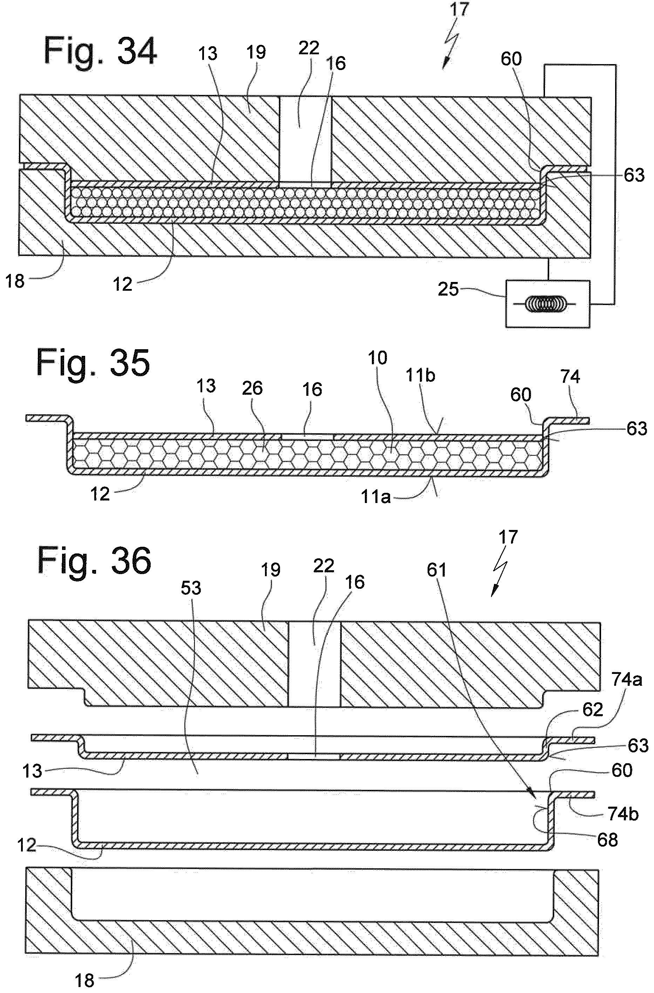

Dies deutet Fig. 34 an. Die Partikel schmelzen auf. Nachfolgend wird das Werkzeug 17 gekühlt und geöffnet. Fig. 35 zeigt das auf diese Weise hergestellte und aus dem Werkzeug 17 entnommene Bauelement 10.

Eine Besonderheit zeigt das Ausführungsbeispiel der Fig. 33a:
Dieses kann in Abänderung der Darstellung des Ausführungsbeispiels der Fig. 33, wie der Teilkreis XXXllla in Fig. 33 erläutert, einen Entlüftungsspalt 64 aufweisen. Die Besonderheit dieses Entlüftungsspaltes 64 besteht darin, dass dieser so bemessen mit, dass zwar Luft ausweichen kann, und somit eine Befüllung der Kavität 24 mit Partikeln 23a, 23b, 23c, 23d, 23e unter hohem Druck erfolgen kann. Der Entlüftungsspalt 64 ist aber derartig gering dimensioniert bemessen, dass die Partikel 23a, 23b, 23c, 23d, 23e selbst durch den Entlüftungsspalt 64 nicht hindurch nach außen, in den Außenraum 69, gelangen können, sondern einen Durchmesser aufweisen, der für einen Durchtritt zu groß ist. Damit wird trotz der Anordnung eines Entlüftungsspaltes 64 gewährleistet, dass die Partikel 23a, 23b, 23c, 23d, 23e die Kavität 24 nicht verlassen.

Der Entlüftungsspalt 64 kann sich zum Beispiel entlang des gesamten Kragens 60 erstrecken und insbesondere umlaufend zwischen einer Innenumfangsfläche 68 des Kragens 60 und einem Randbereich 63 eines Eintauchabschnittes 62 in Umlaufrichtung umlaufend erstrecken.

Der Entlüftungsspalt 64 ist in diesem Falle als ein Ringspalt ausgebildet.

Der Entlüftungsspalt 64 kann aber alternativ auch nur in Form von einer oder mehreren Entlüftungsöffnungen oder Entlüftungsbohrungen ausgebildet sein oder nur abschnittsweise oder segmentartig ausgebildet sein.

Fig. 33a zeigt, dass der Entlüftungsspalt 64 den Innenraum 53 des Schäumwerkzeuges 17 mit dem Außenraum 69 kommunikativ verbindet. Diese Verbindung kann sich zwischen einer Unterseite 70 der Werkzeughälfte 19 und einer Oberseite 71 eines Außenabschnittes 74 des ersten Substrates 12 in Form eines Abschnittes 72 erstrecken, wie dies beispielsweise Fig. 33a zeigt.

Dieser Abschnitt 72 des Entlüftungsspaltes 64, der in Fig. 33a dargestellt ist, kann sich gleichermaßen umlaufend erstrecken. Der Abschnitt 72 kann aber auch als einzelne Bohrung oder als eine Mehrzahl von Bohrungen ausgebildet sein.

Fig. 33b verdeutlicht alternativ ein Ausführungsbeispiel, bei dem ein Abschnitt 72 eines Entlüftungsspaltes 64 als Bohrung ausgestaltet ist, so dass ein Werkstoffbereich 73 des Werkzeuges 19 unmittelbar auf der Oberseite 71 des ersten Substrates 12 aufsitzt. Hier kann der Entlüftungsspalt 64 zum Beispiel mehrere Auslassöffnungen oder Bohrungen aufweisen, die den Innenraum 53 des Schäumwerkzeuges 17 mit dem Außenraum 69 kommunikativ verbinden.

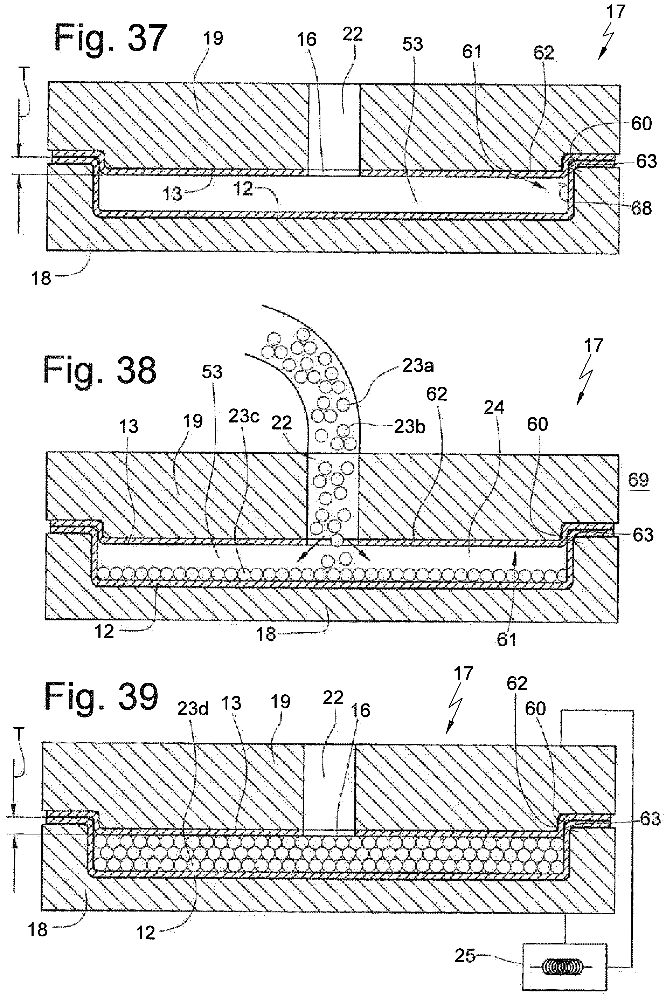

Bei dem Ausführungsbeispiel der Figuren 36 bis 40 sind das erste Substrat 12 und das zweite Substrat 13 jeweils schalenförmig ausgebildet, aber so zueinander angeordnet, dass die beiden Substrate 12, 13 teilweise miteinander nesten können. Einen solchen genesteten, also ineinandergreifenden Zustand zeigt beispielsweise Fig. 37.

Wiederum umfasst das zweite Substrat 13 einen Eintauchabschnitt 62 mit einem Rand 63. Mit seinem Eintauchabschnitt 62 kann das zweite Substrat 13 im Zuge einer Werkzeugschließungsbewegung in eine Öffnung 61 des ersten Substrates 12 hinein eintauchen, die von einem Kragen 60 des ersten Substrates 12 bereitgestellt wird.

Wiederum kann ein in den Figuren nicht dargestellter Entlüftungsspalt 64 vorgesehen sein, der auch bei diesem Ausführungsbeispiel zwischen einer Innenumfangsfläche 68 des Kragens 60 und einem Rand 63 des Eintauchabschnittes 62 verläuft.

Im weiteren Verlauf verbindet der nicht dargestellte Entlüftungsspalt 64 den Innenraum 53 des Schäumwerkzeuges 17 mit dem Außenraum 69 kommunikativ, so dass Druckluft beim Befüllen der Kavität 24 mit Partikeln 23a, 23b, 23c, 23d, 23e entweichen kann. Auch hier ist der Entlüftungsspalt 64 derartig klein bemessen, dass die Partikel 23a, 23b, 23c, 23d, 23e aus der Kavität 24 durch den Entlüftungsspalt 64 nicht herausgeraten können.

Sämtliche Ausführungsbeispiele der Figuren 31 bis 47 zeigen ein erstes Substrat 12 und/oder ein zweites Substrat 13 mit einem Außenabschnitt 74a, 74b, der im endfertig hergestellten Zustand des jeweiligen Bauelementes 10, zum Beispiel gemäß Fig. 35, Fig. 40 oder Fig. 47, über die Kontur des eigentlichen Bauelementes 10 hinaus nach außen vorsteht. Diese Außenabschnitte 74, 74a, 74b können erfindungsgemäß auch abgetrennt werden.

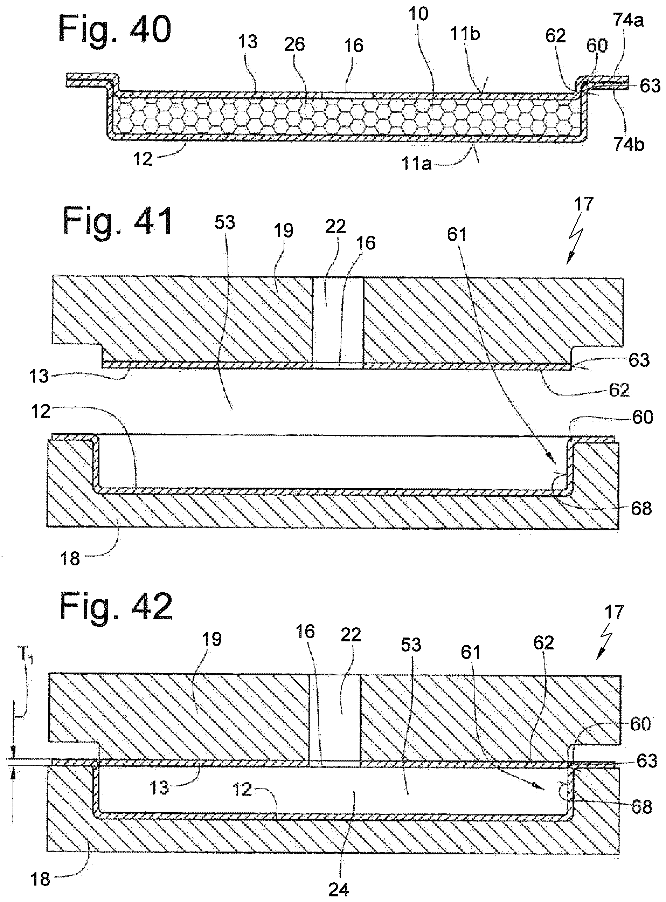

Anhand der Figuren 41 bis 47 soll nun noch ein weiteres Ausführungsbeispiel der Erfindung erläutert werden:
Das Ausführungsbeispiel der Fig. 41 entspricht auf dem ersten Blick dem Ausführungsbeispiel der Fig. 31.

Fig. 42 zeigt, dass nach der Festlegung des ersten Substrates 12 an der ersten Werkzeughälfte 18 und der Festlegung des zweiten Substrates 13 an der zweiten Werkzeughälfte 19 das Werkzeug 17 in eine in Fig. 42 dargestellte Vor-Schließposition verfahren werden kann. In dieser Position ist das zweite Substrat 13 an das erste Substrat 12 herangesetzt und taucht geringfügig, mit der in Fig. 42 dargestellten Eintauchtiefe T₁, mit seinem Eintauchabschnitt 62 in die Öffnung 61 des Kragens 60 am ersten Substrat 12 ein. Fig. 42 zeigt die von den beiden Substraten 12, 13 gebildete Kavität 24 im unbefüllten Zustand.

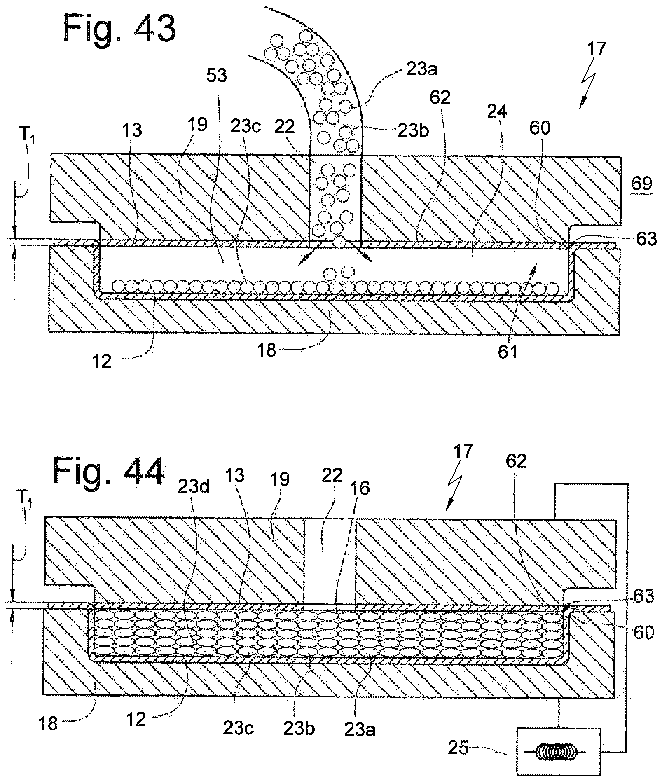

Nachfolgend kann eine Befüllung mit Partikeln gemäß Fig. 43 erfolgen. Wiederum kann ein nicht dargestellter Entlüftungsspalt 64 für ein Ausweichen der Druckluft sorgen.

Fig. 44 zeigt das Werkzeug 17 mit vollständig mit Partikeln 23a, 23b, 23c, 23d, 23e befüllter Kavität 24, wobei bereits ein erster Heizschritt, initiiert durch die Heizeinrichtung 25 vorgenommen worden ist, der die Partikel 23a, 23b, 23c, 23d, 23e angeschmolzen oder erweicht hat. Fig. 44 deutet dies durch eine im Unterschied zu der Kreisform der Fig. 43 angedeutete elliptische Form der einzelnen Partikel 23a, 23b, 23c, 23d, 23e an.

Die Partikel sind infolge des Heizens der beiden Werkzeughälften 18, 19 also angeweicht oder erweicht.

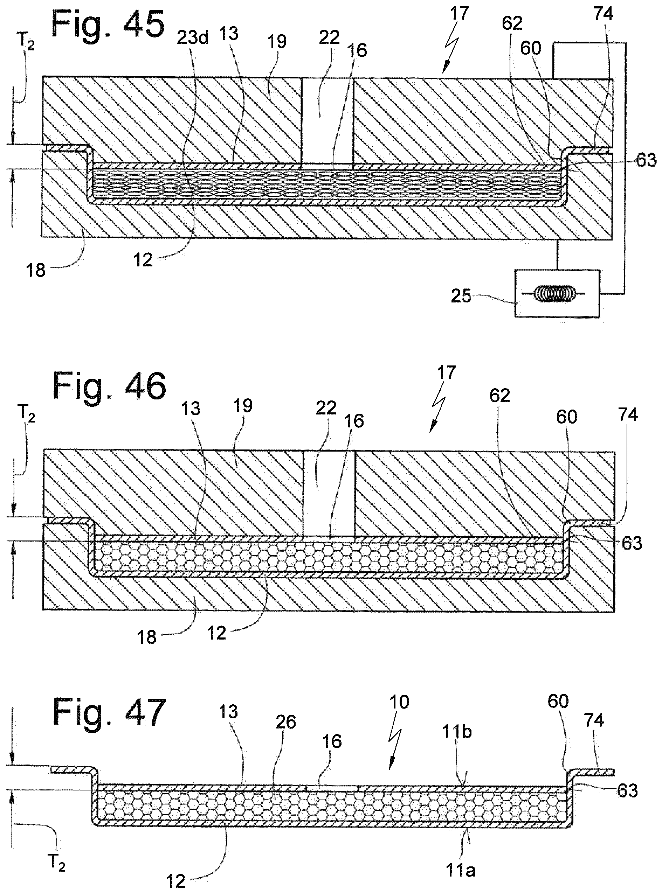

Ausgehend von einer Position des Werkzeuges 17 gemäß Fig. 44 mit einem Erweichungszustand der Partikel 23a, 23b, 23c, 23d, 23e kann erfindungsgemäß nun ein weiterer Komprimierungshub des Werkzeuges 17 durchgeführt werden. Hierbei dringt der Eintauchabschnitt 62 tiefer in die Öffnung 61 ein. Fig. 45 zeigt das Werkzeug 17 nach Durchführung dieses Komprimierungshubes. Die Eintauchtiefe des Eintauchabschnittes 62 in die Öffnung 61 ist mit dem Bezugszeichen T₂ bezeichnet.

Infolge dieses Komprimierungshubes wurde die aufgeweichte Partikelschaummasse komprimiert. Eine Komprimierung kann auf einen Bruchteil des Volumens der Partikelschaummasse vor dem Komprimierungshub stattfinden. Beispielsweise kann eine Volumenreduktion auf die Hälfte, auf ein Drittel oder auf ein Viertel stattfinden. Entsprechend wird die Dichte der aufgeweichten Partikelschaummasse erhöht.

Fig. 45 deutet an, dass bei komprimierter, aufgeweichter Partikelschaummasse die Heizung 25 einen weiteren Heizschritt durchführt. Nun werden die Partikel endaufgeschmolzen und verbacken miteinander. Nachfolgend wird das Werkzeug gekühlt.

Fig. 46 zeigt die komprimierte ausgehärtete Partikelschaummasse. Nach Entnahme des so gebildeten Formlings wird das Bauelement 10 gemäß Fig. 47 gegebenenfalls weiterbearbeitet. Zum Beispiel können die Außenabschnitte 74 abgetrennt werden.

Sämtliche Ausführungsbeispiele der Erfindung veranschaulichen die ausgehärtete Partikelschaummasse als einen im Wesentlichen quaderförmigen Körper. Von der Erfindung sind freilich auch beliebige Raumkonturen umfasst.

Auch kann das Bauelement 10 Bereiche mit ausgehärteter Partikelschaummasse mit unterschiedlichen Wand- oder Dickenbereichen umfassen.

Insbesondere können in der Partikelschaummasse 26 auch Schraubbefestigungen oder Dome angeordnet sein, zum Beispiel um Verstärkungsbereiche zu bilden. Das Bauelement 10 weist also nicht zwingend durchgängig eine konstante Wandstärke auf.

## Patentansprüche

1. Verfahren zur Herstellung eines flächenhaft ausgebildeten Bauelementes (10) in Sandwich-Leichtbauweise mit einer hochwertigen Oberfläche (11a, 11b), umfassend die folgenden Schritte:
a) Bereitstellen eines ersten folienartigen Substrates (12) mit einer ersten Außenkontur (14),
b) Bereitstellen eines zweiten folienartigen Substrates (13) mit einer zweiten Außenkontur (15), das wenigstens einen Durchbruch (16) aufweist,
c) Bereitstellen eines zwei Werkzeughälften (18, 19) umfassenden, öffnen- und schließbaren Werkzeuges (17), wobei die zweite Werkzeughälfte (19) wenigstens eine Befüllöffnung (22) aufweist, wobei die erste Werkzeughälfte (18) eine zu der ersten Außenkontur (14) formkomplementäre erste Innenkontur (20) und die zweite Werkzeughälfte (19) eine zu der zweiten Außenkontur (15) formkomplementäre zweite Innenkontur (21) aufweist,
d) Anordnen des ersten Substrates (12) in der ersten Werkzeughälfte (18) bei geöffnetem Werkzeug (17),
e) Anordnen des zweiten Substrates (13) in der zweiten Werkzeughälfte (19) bei geöffnetem Werkzeug (17), derart, dass Durchbruch (16) und Befüllöffnung (22) miteinander fluchten,
f) Schließen des Werkzeugs (17),
g) Bereitstellen von granularem Ausgangsmaterial in Form von losen Partikeln (23a, 23b, 23c) eines aufschäumbaren Partikelschaumes, wie EPS, EPE, ABS, PPSU, PESU, PSU oder PEEK,
h) Zuführen der Partikel (23a, 23b, 23c) durch die Befüllöffnung (22) und den Durchbruch (16) hindurch in eine von den beiden Substraten (12, 13) begrenzte Kavität (24),
i) Heizen der beiden Werkzeughälften (18, 19),
j) Verbacken der Partikel (23a, 23b, 23c) zu einem homogenen, aushärtbaren Partikelschaum (26), infolge eines Wärmetransfers von dem Werkzeug (17) durch die beiden Substrate (12, 13) hindurch in die Kavität (24) hinein,
k) Kühlen der beiden Werkzeughälften (18, 19),
l) Aushärtenlassen des Partikelschaums (26),
m) Öffnen des Werkzeuges und Entnehmen des so gebildeten Formlings (10).

2. Verfahren zur Herstellung eines flächenhaft ausgebildeten Bauelementes (10) in Sandwich-Leichtbauweise mit einer hochwertigen Oberfläche (11a, 11b), insbesondere Verfahren nach Anspruch 1, umfassend die folgenden Schritte:
a) Bereitstellen eines ersten folienartigen Substrates (12),
b) Bereitstellen eines zweiten folienartigen Substrates (13), das wenigstens einen Durchbruch (16) aufweist,
c) Bereitstellen eines zwei Werkzeughälften (18, 19) umfassenden, öffnen- und schließbaren Werkzeuges (17), wobei die zweite Werkzeughälfte (19) wenigstens eine Befüllöffnung (22) aufweist,
d) Anordnen des ersten Substrates (12) in oder an der ersten Werkzeughälfte (18) bei geöffnetem Werkzeug (17),
e) Anordnen des zweiten Substrates (13) in oder an der zweiten Werkzeughälfte (19) bei geöffnetem Werkzeug (17), derart, dass Durchbruch (16) und Befüllöffnung (22) miteinander fluchten,
f) Schließen des Werkzeugs (17),
g) Bereitstellen von granularem Ausgangsmaterial in Form von losen Partikeln (23a, 23b, 23c) eines aufschäumbaren Partikelschaumes, wie EPS, EPE, ABS, PPSU, PESU, PSU oder PEEK,
h) Zuführen der Partikel (23a, 23b, 23c) durch die Befüllöffnung (22) und den Durchbruch (16) hindurch in eine von den beiden Substraten (12, 13) begrenzte Kavität (24),
i) Heizen der beiden Werkzeughälften (18, 19),
j) Verbacken der Partikel (23a, 23b, 23c) zu einem homogenen, aushärtbaren Partikelschaum (26), infolge eines Wärmetransfers von dem Werkzeug (17) durch die beiden Substrate (12, 13) hindurch in die Kavität (24) hinein,
k) Kühlen der beiden Werkzeughälften (18, 19),
l) Aushärtenlassen des Partikelschaums (26),
m) Öffnen des Werkzeuges und Entnehmen des so gebildeten Formlings (10).

3. Verfahren nach Anspruch 1 oder 2, **dadurch gekennzeichnet, dass** dem Schritt a) ein Tiefziehen des ersten Substrates (12) aus einem flachen Zustand (38) vorausgeht.

4. Verfahren nach Anspruch 1 oder 2, **dadurch gekennzeichnet, dass** das erste Substrat (12) von einem Kunststoff-Spritzgussteil bereitgestellt ist.

5. Verfahren nach einem der Ansprüche 1 bis 4, **dadurch gekennzeichnet, dass** dem Schritt b) ein Tiefziehen des zweiten Substrates (13) aus einem flachen Zustand (43) vorausgeht.

6. Verfahren nach einem der Ansprüche 1 bis 4, **dadurch gekennzeichnet, dass** das zweite Substrat (13) von einem Kunststoff-Spritzgussteil bereitgestellt ist.

7. Verfahren nach einem der vorangegangenen Ansprüche, **dadurch gekennzeichnet, dass** das erste Substrat (12) und/ oder das zweite Substrat (13) aus einem thermoplastischen Material besteht, und insbesondere ein Co-Extrudat aus ABS und PMMA oder aus ABS, Polycarbonat und PMMA umfasst.

8. Verfahren nach einem der vorangegangenen Ansprüche, **dadurch gekennzeichnet, dass** das erste Substrat (12) vollflächig durchgehend ausgebildet ist.

9. Verfahren nach einem der vorangegangenen Ansprüche, **dadurch gekennzeichnet, dass** das zweite Substrat (13) mit Ausnahme des wenigstens einen Durchbruches (16) vollflächig durchgehend ausgebildet ist.

10. Verfahren nach einem der Ansprüche 1 bis 8, **dadurch gekennzeichnet, dass** das zweite Substrat (13) von einem Ringkörper (29) gebildet ist.

11. Verfahren nach einem der vorangegangenen Ansprüche, **dadurch gekennzeichnet, dass** Schritt g) ein Vor-Aufschäumen von Partikeln (34a, 34b, 34c) außerhalb des Werkzeuges umfasst und dass Schritt j) ein Zuführen teilweise aufgeschäumter oder vollständig aufgeschäumter Partikel (23a, 23b, 23c) umfasst.

12. Verfahren nach einem der vorangegangenen Ansprüche, **dadurch gekennzeichnet, dass** Schritt j) ein vollständiges Aufschäumen oder ein Endaufschäumen der Partikel (23a, 23b, 23c) umfasst.

13. Verfahren nach einem der vorangegangenen Ansprüche, **dadurch gekennzeichnet, dass** Schritt f) ein nur teilweises Schließen des Werkzeuges (17) umfasst, wobei dem Schritt h) zur Erzielung einer Kompression der zugeführten Partikel (23a, 23b, 23c) eine weitere Schließbewegung des Werkzeuges (17) nachfolgt.

14. Verfahren zur Herstellung eines flächenhaft ausgebildeten Bauelementes (10) in Sandwich-Leichtbauweise mit einer hochwertigen Oberfläche (11a, 11b), umfassend die folgenden Schritte:
a) Bereitstellen eines ersten folienartigen Substrates (12),
b) Bereitstellen eines zweiten folienartigen Substrates (13), das wenigstens einen Durchbruch (16) aufweist,
c) Bereitstellen eines zwei Werkzeughälften (18, 19) umfassenden, öffnen- und schließbaren Werkzeuges (17), wobei die zweite Werkzeughälfte (19) wenigstens eine Befüllöffnung (22) aufweist,
d) Anordnen des ersten Substrates (12) in oder an der ersten Werkzeughälfte (18) bei geöffnetem Werkzeug (17),
e) Anordnen des zweiten Substrates (13) in oder an der zweiten Werkzeughälfte (19) bei geöffnetem Werkzeug (17), derart, dass Durchbruch (16) und Befüllöffnung (22) miteinander fluchten,
f) Verlagern des Werkzeugs (17) in eine Vor-Schließposition,
g) Bereitstellen von granularem Ausgangsmaterial in Form von losen Partikeln (23a, 23b, 23c) eines aufschäumbaren Partikelschaumes, wie EPS, EPE, ABS, PPSU, PESU, PSU oder PEEK,
h) Zuführen der Partikel (23a, 23b, 23c) durch die Befüllöffnung (22) und den Durchbruch (16) hindurch in eine von den beiden Substraten (12, 13) begrenzte Kavität (24),
i) Heizen der beiden Werkzeughälften (18, 19) und Anschmelzen der Partikel, infolge eines Wärmetransfers von dem Werkzeug (17) durch die beiden Substrate (12, 13) hindurch in die Kavität (24) hinein,
j) Verlagern des Werkzeugs (17) in eine End-Schließposition und Komprimieren der angeschmolzenen Partikel,
k) weiteres Heizen der beiden Werkzeughälften (18, 19) und Verbacken der Partikel (23a, 23b, 23c) zu einem homogenen, aushärtbaren Partikelschaum (26), infolge eines Wärmetransfers von dem Werkzeug (17) durch die beiden Substrate (12, 13) hindurch in die Kavität (24) hinein,
l) Kühlen der beiden Werkzeughälften (18, 19),
m) Aushärtenlassen des Partikelschaums (26),
n) Öffnen des Werkzeuges und Entnehmen des so gebildeten Formlings (10).

15. Flächenhaft ausgebildetes Bauelement (10) in Sandwich-Leichtbauweise mit einer hochwertigen Oberfläche (11a, 11b), insbesondere hergestellt nach einem Verfahren nach einem der vorangegangenen Ansprüche, umfassend einen ausgehärteten Partikelschaum (26), der auf einer ersten Seite ein erstes Substrat (12) und auf seiner zweiten, der ersten Seite abgewandten Seite ein zweites Substrat (13) aufweist.
